(19) Europäisches Patentamt

European Patent Office

Office européen des brevets

(11) **EP 1 635 286 A1**

(12) **EUROPEAN PATENT APPLICATION**

(43) Date of publication:
**15.03.2006 Bulletin 2006/11**

(51) Int Cl.:
***G06Q 10/00*** *(2006.01)*

(21) Application number: **05014209.0**

(22) Date of filing: **30.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **10.09.2004 US 939004**
**02.07.2004 US 585428 P**

(71) Applicant: **Rockwell Automation Technologies, Inc.**
**Mayfield Heights, OH 44124 (US)**

(72) Inventors:
• **Maturana, Francisco P.**
  **Ohio 44124 (US)**
• **Staron, Raymond J.**
  **Ohio 44143 (US)**
• **Carnahan, Danny L.**
  **Ohio 44236 (US)**
• **Discenzo, Frederick M.**
  **Ohio 44141 (US)**

(74) Representative: **Jung HML**
  **Schraudolphstrasse 3**
  **80799 München (DE)**

(54) **Energy management system**

(57)    A control system for an energy-related system including at least a first energy consumer and a first energy producer, and related method, are disclosed. The control system includes a first agent in communication with the first energy consumer for the purpose of at least one of controlling and monitoring an operation of the first energy consumer, a second agent in communication with the first energy producer for the purpose of at least one of controlling and monitoring an operation of the first energy producer, and a network at least indirectly coupling the first and second agents and allowing for communication therebetween. The first and second agents are capable of negotiating with one another in order to determine an amount of energy to be delivered from the first energy producer to the first energy consumer.

FIG. 1

**Description**

CROSS-REFERENCE TO RELATED APPLICATIONS

This application is based on U.S. provisional patent application no. 60/585,428 filed July 2, 2004 which is entitled "Energy Management System", is a continuation-in-part of U.S. patent application no. 10/808,999 filed March 25, 2004, which is based on U.S. provisional patent application no. 60/553,360 filed March 15, 2004, each of which is entitled "Agent Program Environment", also is a continuation-in-part of U.S. patent application no. 10/859,389 filed June 2, 2004, which is entitled "Autonomous Control Unit-Based Control System Capable of Active Diagnostics", also is a continuation-in-part of U.S. patent application no. 10/814,549 filed March 31, 2004, which is entitled "System and Method for Interfacing Multi-Agent System", also is a continuation-in-part of U.S. patent application no. 10/808,680 filed March 25, 2004 and entitled "Agent-Equipped Controller Having Data Table Interface Between Agent-Type Programming and Non-Agent Type Programming", also is a continuation-in-part of U.S. patent application no. 10/808,772 filed March 25, 2004 and entitled "Controller With Agent Functionality", and additionally is a continuation-in-part of U.S. patent application no. 10/737,384 filed on December 16, 2003 and entitled "Decentralized Autonomous Control for Complex Fluid Distribution Systems", which is based on provisional application no. 60/433,892 filed December 16, 2002 and entitled "Agent-Based Active Diagnostics System for Complex Distribution Networks", each of which is beneficially assigned to the present assignee and is hereby incorporated by reference herein, and claims the benefit thereof.

STATEMENT REGARDING FEDERALLY SPONSORED RESEARCH OR DEVELOPMENT

BACKGROUND OF THE INVENTION

The present invention relates to energy or power-related systems and, more particularly, relates to systems for generating, delivering, routing, storing and/or consuming energy, for example, electrical energy.

Electrical energy generation, distribution, and/or consumption systems ("energy-related systems") are among the most complicated and economically significant systems operating today. Such systems typically involve a multiplicity of energy producers and energy consumers tied together by way a complex web of energy distribution channels or energy transporters. The complexity of such systems is further increased if one considers that many, if not all, energy producers themselves are complex systems that convert non-electrical energy resources such as fossil fuel, nuclear or solar energy resources into electrical energy, and that require additional resources such as chilled water for their operation. That is, the complexity of energy-related systems is further increased if one considers the scope of such systems to include the relationships between energy producers and upstream energy production enablers that make it possible for those energy producers to operate.

To be effective, such electrical energy-related systems need to be capable of rapidly, reliably and accurately adapting to a wide variety of operational needs and circumstances. The energy required by energy consumers typically does not remain constant for long periods of time and can vary in terms of a variety of characteristics ranging from required voltage and current levels to frequency and phase characteristics, and from average or peak power levels to the type of power (e.g., AC or DC) that is required. For example, overall power requirements vary significantly with the time of day, with the day of the week, and during different periods of the year. Such power requirements can vary not only due to variations in the energy needs of energy consumers that are attempting to accomplish intended goals, but also due to environmental regulations and market forces pertaining to the price of electrical energy. To meet such changing energy demands, energy producers can either individually adjust the energy that they are producing and outputting and/or operate in cooperation with one another to collectively adjust their output energy.

Energy consumption is far from the only operational aspect of energy-related systems that can necessitate rapid, reliable and accurate changes to system operation. Indeed, energy producers often experience fluctuations in terms of their intrinsic abilities to generate and output power of various levels and other characteristics. For example, under certain circumstances it can become necessary for a given energy producer to shut down for testing or maintenance, or to avoid cascading failures. Also for example, in circumstances where multiple energy producers operate together to generate and output power (e.g., to a common power grid), and to the extent that a given energy producer finds it necessary to adjust its energy output, it can become necessary for others of the energy producers to modify their own energy output to account for the changes in the given energy producer's output. As in the case of energy consumers, environmental regulations and market forces pertaining to the price of electrical energy can impact the operation of energy producers as well.

Additionally, the operation of energy producers often is highly dependent upon the operation of energy production enablers that supply resources to the energy producers allowing those producers to operate. Yet the operation of the energy production enablers also is susceptible to fluctuation for a variety of reasons including, again, environmental regulations and market forces. For example, the availability and/or price of certain raw materials that are supplied by energy production enablers to energy producers, such as oil, coal or natural gas, can vary significantly.

Also, the capabilities of energy transporters to reliably and efficiently transport energy from energy producers to energy consumers can vary for numerous reasons. For example, storms and other weather-related conditions can occasionally disable or disrupt the operation of power lines that are transmitting electrical energy. Also, in some circumstances the particular arrangement of energy transporters can necessitate changes in the operation of those energy transporters. For example, a first energy transporter may be capable of delivering energy to multiple energy consumers but a second energy transporter may be capable of delivering energy only to a particular one of those multiple energy consumers. In such case, if at a first time the first energy transporter is delivering energy to the particular energy consumer and the second energy transporter is not actively delivering energy, it may become necessary at a second time that the operation of the first and second energy transporters be switched so that it is the second energy transporter that delivers energy to the particular energy consumer and so that the first energy transporter is freed up to meet the demands of others of the energy consumers.

Given these various levels of complexity inherent in the operations of energy-related systems, and given the importance of operating such systems in an efficient and reliable manner, such systems deserve careful control and monitoring. Yet conventional energy-related systems are often limited in this regard, particularly in terms of controlling and coordinating the interdependent operations of different energy consumers, energy producers, energy production enablers and energy transporters. In particular, central control systems for allowing system-wide control of energy-related systems have typically been impractical to implement for several reasons, particularly the difficulty and expense associated with designing control programs for such complicated systems.

Consequently, in conventional implementations, the various components of electrical energy-related systems such as energy consumers, producers, production enablers and transporters are typically controlled and operated independently of one another such that there is no overall control for the system as a whole, and any coordination of the different system components merely occurs in a reactive manner. For example, rather than there being any controlled coordination of an energy consumer with an energy producer when the energy consumer shuts down, instead the energy producer simply unilaterally reduces its output of electrical energy when it detects that the energy consumer load is decreasing.

Nevertheless, given the high degree to which the operations of the different components of an electrical energy-related system are interdependent upon one another, and given that planning and coordination of the operations of the system components could yield improved system performance and efficiency, it would be advantageous if a new control system could be implemented that allowed for overall control of the electrical energy-related system without requiring a central monolithic control system. In particular, it would be advantageous if a new control system for controlling energy-related systems could be developed that was capable of rapidly, reliably and accurately controlling the operations of all or at least a significant number of the components of such systems, to improve the coordination of those system components and improve overall system performance, reliability and efficiency. It would further be advantageous if such a new control system could be implemented at a relatively low cost and with relatively little difficulty in comparison with the implementation of a conventional, centralized control system.

BRIEF SUMMARY OF THE INVENTION

The present inventors have recognized that a new control system could be developed for controlling and monitoring an energy-related system that employed a plurality of distributed, agent-based controllers with respect to the control of the respective components of the energy-related system. By using such agent-based controllers, overall control of the energy-related system including the coordinating of interactions of the components of that system can be achieved through communications and negotiations among the agents. At the same time, the complexity of the control programming necessary for achieving such coordinated interaction of the components of the energy-related system is much less than would be the case for a centralized control system, since the respective agent-based controllers share much of the same programming in common with one another.

In particular, the present invention relates to a control system for an energy-related system including at least a first energy consumer and a first energy producer. The control system includes a first agent in communication with the first energy consumer for the purpose of at least one of controlling and monitoring an operation of the first energy consumer, a second agent in communication with the first energy producer for the purpose of at least one of controlling and monitoring an operation of the first energy producer, and a network at least indirectly coupling the first and second agents and allowing for communication therebetween. The first and second agents are capable of negotiating with one another to determine an amount of energy to be delivered from the first energy producer to the first energy consumer. In some (but necessarily all) embodiments, the negotiating can also relate to other issues such as time(s) at which energy is to be delivered, locations with respect to which energy is to be delivered, and the cost of energy to be delivered, for example.

Additionally, the present invention relates to a control system for an energy-related system including a plurality of system components including at least two of a first energy consumer, a second energy consumer, a first energy producer, a second energy producer, a first energy transporter, a second energy transporter, a first energy production enabler, a second energy production enabler, and an external energy source. The control system includes a first agent in communication with at least a first of the system components for the purpose of at least one of controlling and monitoring a first operation of the first system component, a second agent in communication with at least a second of the system components for the purpose of at least one of controlling and monitoring a second operation of the second system component, and a network at least indirectly coupling the first and second agents and allowing for communication therebetween. The first and second agents are capable of communicating with one another to arrive at an agreed-upon interoperation of the first and second system components, the agreed-upon interoperation relating to at least one of consuming, distributing, generating and supporting generation of energy.

The present invention further relates to a method of controlling operation of an energy-related system including at least a first energy consumer and a first energy producer. The method includes determining, at a first agent-based control device associated with the first energy consumer, that a need for energy exists at the first energy consumer. The method additionally includes generating at the first agent-based control device a first bid concerning the need and sending the first bid from the first agent-based control device to a second agent-based control device associated with the first energy producer. The method further includes processing the first bid at the second agent-based control device to determine a first bid response and sending the first bid response from the second agent-based control device to the first agent-based control device. The method additionally includes, if the first bid response is favorable, determining at the first agent-based control device whether to execute a plan based at least in part upon at least one of bid information in the first bid and bid response information in the first bid response, where execution of the plan results in at least a portion of the need being met.

The present invention additionally relates to a control device for implementation in conjunction with at least one component of an energy-related system, the energy-related system including at least one of a first energy consumer, a first energy producer, a first energy transporter, a first energy production enabler, and an external energy source. The control device includes a controller configured to operate as an agent, the controller including at least one memory device on which is stored generalized agent operational programming and application-specific agent programming. The generalized agent operational programming is capable of constructing outbound messages intended to be sent to, and interpreting inbound messages received from, at least one other agent, whereby the controller operating as the agent is able to intercommunicate with the at least one other agent in order to negotiate a plan of operation concerning at least one of energy consumption, energy distribution, energy production, and support of energy production, and then execute the plan of operation. Typically, although not necessarily, this energy planning process among agents takes place perpetually, and apart from low level control performed by the agents in controlling and otherwise interacting with the devices that actually consume, produce, transport and enable the production of energy.

The present invention further relates to a system for performing an energy-related process including at least one of consuming, distributing, producing and supporting the production of energy, and controlling the process. The system includes first components for performing the energy-related process including at least two of a first energy consumer, a second energy consumer, a first energy producer, a second energy producer, a first energy transporter, a second energy transporter, a first energy production enabler, a second energy production enabler, and an external energy source. The system also includes second components for controlling the respective first components, where the second components include at least two agent-based controllers respectively in association with respective ones of the at least two first components, the at least two agent-based controllers being in communication with one another by way of a network, the at least two agent-based controllers being configured to negotiate with one another to arrive at plans to satisfy requirements of the first components.

BRIEF DESCRIPTION OF THE DRAWINGS

FIG. 1 is a schematic diagram of exemplary components of an exemplary energy-related system;

FIG. 2 is a simplified perspective view of several of the components (or subcomponents thereof) of the exemplary energy-related system of FIG. 1 shown to be controlled by a plurality of distributed controllers connected over a network forming a distributed control system such as may be used with the present invention;

FIG. 3 is a block diagram of exemplary hardware components of one of the controllers of FIG. 2, which include a processor, a memory holding data and programs executed by the processor, a network card providing an interface to the network of FIG. 2 and I/O circuits for communicating with the machines of FIG. 2;

FIG. 4 is a block diagram showing exemplary software components that are included within at least one of the controllers of FIG. 2 and operate together as at least one agent;

FIGS. 5-6 are block diagrams showing additional exemplary features of the software components of FIG. 4;

FIG. 7 is a block diagram showing exemplary high-level steps of operation of the controllers of FIG. 1 by way of the agent-forming software components shown in FIGS. 4-6;

FIG. 8 is a block diagram showing exemplary interactions among several distributed, agent-enabled controllers as discussed with reference to FIGS. 2-7, where the respective controllers are associated with respective components (or groupings of components or subcomponents) of the energy-related system of FIGS. 1-2;

FIG. 9 is a flowchart depicting exemplary steps of operation of several of the distributed, agent-enabled controllers of FIG. 8 in controlling the operation of the energy-related system of FIGS. 1-2;

FIG. 10 is a block diagram showing exemplary interactions among several distributed, agent-enabled controllers as shown in FIG. 8, where the respective controllers are associated with respective components (or groupings of components or subcomponents) of the energy-related system of FIGS. 1-2, and are additionally in communication with an exemplary external device;

FIG. 11 is a block diagram showing further exemplary interactions among several distributed, agent-enabled controllers such as those discussed above with reference to FIGS. 2-7 in response to a violation event by one of the components of the energy-related system shown in FIGS. 1-2;

FIGS. 12 and 13 provide graphical representations of first and second tools by which the agent-enabled controllers such as those discussed above with reference to FIGS. 2-7 are able to detect violation events and anomalies, as well as other conditions, of the energy-related system shown in FIGS. 1-2 (as well as of the agent-enabled controllers themselves); and

FIGS. 14-16 are block diagrams showing exemplary cost criteria that can be utilized by agent-enabled controllers such as those discussed with reference to FIGS. 8-9 in their energy-related negotiations.

DETAILED DESCRIPTION OF THE PREFERRED EMBODIMENT

Generalized Description of Energy-Related Systems

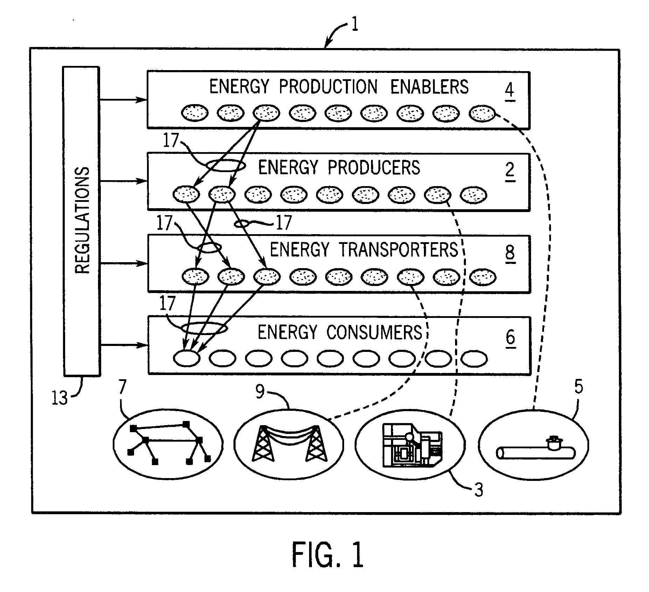

Referring to FIG. 1, an electrical energy generation, distribution, routing, storing and/or consumption system ("energy-related system") 1 commonly includes four types of components. First, there are one or more energy producers 2 that are capable of producing electrical power. The energy producers 2 can include, for example, a generator set (or "genset") 3 formed by an electric generator/alternator that is driven by internal combustion engines as shown in FIG. 1. Also, the energy producers 2 can include, for example, generators driven by a variety of other driving mechanisms such as steam turbines, coal, water flow or wind, as well as alternate electricity-producing devices such as nuclear generators, fuel cells, or solar cells or energy harvesting devices (e.g. windmills, piezo-generators, photo-voltaic farms, etc.) or aerobic and anaerobic digesters such as can be coupled to power generators. Often, the energy producers 2 depend upon one or more additional components to produce the electrical energy, which can be termed energy production enablers 4. The energy production enablers 4 can include any of a variety of components or other systems that enable the energy producers 2 to produce electrical energy, for example, a piping system 5 for delivering combustible natural gas or other fuel to the genset 3 as shown in FIG. 1. Other exemplary energy production enablers 4 can include, for example, systems for producing steam to be used by steam turbines such as coal-heated boiler systems and nuclear reactor systems, or hydrogen generators or reformers for fuel cells, or systems for controlling water flow, wind, or solar energy that is provided to the energy producers 2.

Electrical energy that is produced by the energy producers 2 is in turn distributed to one or more energy consumers 6 by way of one or more energy transporters 8. As shown, any given energy consumer 6 can be made up of a plurality of energy consumer subcomponents 7, albeit any given energy consumer can also simply be a single component that requires electricity. The energy consumers 6 are representative of any device(s) that can require electrical power, including, for example, machinery at manufacturing plants and other commercial loads, consumer appliances and other residential loads, refueling sites for electric vehicles, and a variety of other loads. The energy transporters 8 are representative of any intermediary device(s) that are employed to communicate or control the flow of power from one or more of the energy producers 2 to one or more of the energy consumers 6 including, for example, high and/or low voltage power distribution lines 9 and related devices such as switching circuits/circuit breakers and transformers.

FIG. 1 shows, by way of a plurality of arrows 17, generally the flow of energy and energy-carrying materials (as well as possibly other substances) among the energy producers, production enablers, consumers and transporters 2, 4, 6 and 8. Namely, the energy production enablers 4 supply energy and materials to the energy producers 2 that are required for the energy producers to generate electrical energy, the energy producers 2 in turn provide electrical energy to the energy transporters 8, and the energy transporters in turn communicate electrical energy to the energy consumers 6. Although not shown, in some circumstances the flow of energy, materials and/or other substances can also flow in other directions among the energy producers, production enablers, consumers and transporters 2, 4, 6, and 8; for example, in some cases, one or more of the energy transporters 8 can supply energy to one or more of the energy production enablers 4 to keep those components operating, or one or more of the energy consumers 6 might supply energy to the energy producers 2 in cases where those energy consumers switch from an energy consumption mode to an energy generation mode (e.g., where the energy consumers are capable of switching between operation as a motor and as a generator, switching between the charging and discharging of a capacitor bank, or switching between the charging and discharging of a fuel cell for local and distributed energy storage and supply).

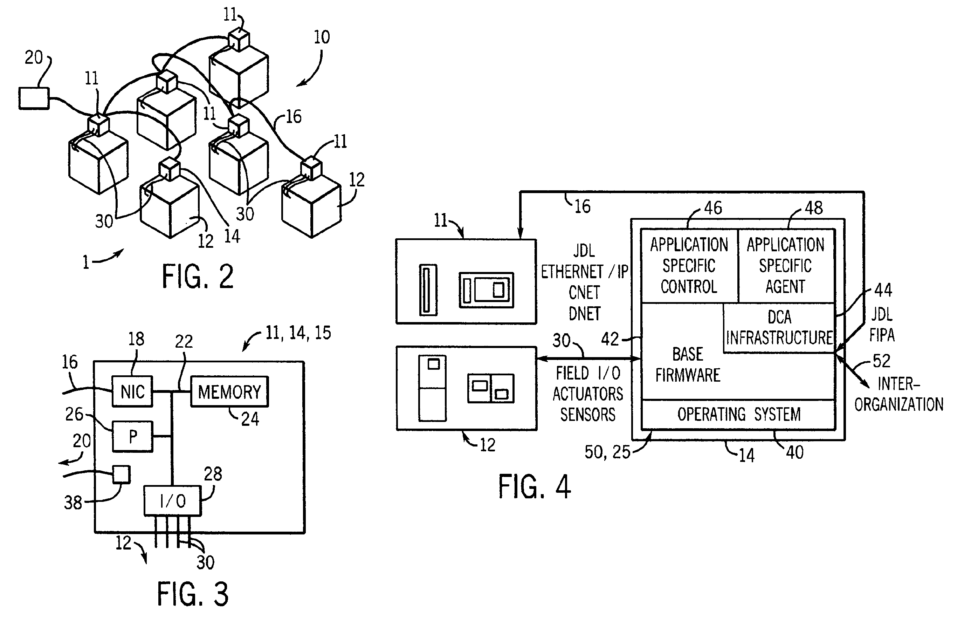

In the present embodiment, the communication of information among the energy producers, production enablers, consumers and transporters 2, 4, 6, and 8 occurs indirectly by way of a distributed control system 10 discussed in further detail below with respect to FIG. 2-11. Nevertheless, in some embodiments, the communications afforded by the distributed control system 10 can be supplemented (or replaced) by communications that occur directly among the energy producers, production enablers, consumers and transporters 2, 4, 6, and 8. Such communications could occur by way of any of a variety of direct and indirect communications media including, for example, dedicated wire connections, telephone lines, wireless communications technologies, and the internet. Indeed, communications can indirectly occur by way of components of the energy-related system 1 itself, such as by the detection of voltage sags or power-line characteristics such as phase imbalance or high-frequency power-line disturbances. Power-line communications via the X10 protocol can also be employed. Thus, with respect to such embodiments, the arrows 17 shown in FIG. 1 (as well as other arrows not shown) could also represent the flow of information directly among the various energy producers, production enablers, consumers and transporters 2, 4, 6, and 8. Also as shown, each of the components of an energy-related system such as the system 1 can be, and typically is, affected or constrained by internal and/or external regulations (e.g., a variety of different constraints, drivers or influences including, for example, governmental regulations and market forces), represented by a regulations box 13.

FIG. 1 is intended to provide, in a schematic form, a generic representation of components of a generalized electrical energy-related system. Although examples of the energy producers 2, production enablers 4, consumers 6 and transporters 8 are discussed above and shown in FIG. 1, the present invention is intended to apply generally to any given electrical energy-related system having any combination of one or more energy producers, one or more energy production enablers, one or more energy consumers and/or one or more energy transporters. Additionally, the present invention is intended to apply generally to other types of energy-related systems as well that include one or more energy producers, production enablers, consumers and/or transporters, for example, a hydraulic energy-related system, a heat-based energy-related system and other possible energy-related (or power-related) systems. Further, the present invention is intended to be applicable to energy-related systems of a variety of scopes, such as an international power system, a regional power grid, a subdivision or plant system, a vehicle or shipboard system (e.g., on an aircraft carrier or destroyer, or on a hybrid-electric vehicle), a component or subsystem, or a micro-device such as a power scavenging system for self-powered sensor nodes, and even to systems that are similar to or related to energy-related systems, such as a water distribution system.

Typically, an energy-related system will have at least one energy producer 2, at least one energy consumer 6, and at least one energy transporter 8, if not also at least one energy production enabler 4. Nevertheless, the present invention is still intended to be applicable to energy-related systems that lack some of these devices. For example, energy transporters might not be required in systems in which the producers are directly coupled to the consumers. Also, in some systems, it would not be necessary to consider the impact of energy production enablers (e.g., where a water-flow driven generator is driven by an uncontrolled water flow source such as a river). Further, while the energy producers 2, production enablers 4, consumers 6 and transporters 8 can be representative of overall devices that produce, support the production of, consume and/or transport energy, they also can be representative of subcomponents of such devices including, for example, actuatable machines, sensors, communication devices, and input/output devices, as well as groupings of such devices.

Additionally, whether a given device is properly included as (or as part of) an energy producer 2, production enabler 4, consumer 6 or transporter 8 is to some extent an arbitrary determination. For example, a step-down voltage transformer near or at a residence might be considered to be an energy transporter (or a subcomponent of an energy transporter) or alternately as an energy consumer (or a subcomponent thereof). Indeed, an entire network of distribution lines and energy consumers interconnected by those lines could be viewed together as constituting a higher-level energy consumer rather than as an assemblage of energy transporters and energy consumers. Further, in some circumstances a given device can operate as more than one type of component; for example, a device could at different times operate as a motor and as a generator and thus constitute both an energy producer and an energy consumer. Consequently, the energy-related system 1 of FIG. 1 is intended to be generally representative of any energy generation, distribution and/or consumption system having one or more of any of a variety of different types of energy producers, energy production enablers, energy consumers and energy transporters.

Generalized Description of Hardware of Energy Management System (EMS)

Referring to FIG. 2, each of the energy producers 2, energy production enablers 4, energy consumers 6 and energy transporters 8 (or subcomponents or groupings thereof) of the energy-related system 1 can be respectively considered as constituting a machine 12, such that the energy-related system can be understood generally as including one or more machines 12. In accordance with the present invention, all of, or at least some of, the machines 12 of the energy-related system 1 are controlled and/or monitored by way of the distributed control system 10. As shown, the distributed control system 10 includes a plurality of electronic computers or controllers 11,14 each of which is respectively associated with a respective one (or more) of the machines 12. Each controller 11,14 is configured for electrical communication through a respective I/O line or lines 30 with its respective machine or machines 12. In some embodiments, the controllers 11,14 can be ControlLogix or FlexLogix programmable control modules commercially available from Rockwell Automation, Inc. of Milwaukee, Wisconsin, the beneficial assignee of the present invention. However, in alternate embodiments the controllers 11,14 can take other forms, for example, personal computers, microprocessors, microcomputers, embedded computers or other computing devices (e.g., handheld computer devices, palm computers, or organizers).

The electronic controllers 11,14 are linked to each other via a network 16 of a type well known in the art allowing for connected messaging or other communication protocol between the various controllers 11,14, such that each of the controllers 11,14 can produce messages for or consume messages from others of the controllers 11,14. The network 16 can be a wired or wireless network of any of a variety of types, for example, an Ethernet, ControlNet or DeviceNet-type network, the internet, a power-line based network such as an X10-type network, a wireless network involving RF, Bluetooth, 802.11b, IEEE 802.14.4, or cell phone-type technology, or networks employing infrared, acoustic, microwave, free-space optical networks, sensor networks (e.g. AS-I and Intellibus), or fiber-optics technologies. In certain embodiments, the network 16 is representative of multiple redundant networks or other communication linkages (which can be implemented using redundant network media or supplemental hard-wired connections instead of or in addition to a network, or wireless networks) to resist failure. Multiple different networks and access paths can be deployed in a single system providing for redundancy and reliability.

A human machine interface HMI 20, being a conventional computer terminal or other similar device, can be attached to the network 16 or to one or more of the controllers 11,14 (as shown) using a network such as the network types referenced above (wireless and wire-line) to allow for programming of the various controllers, setting controller, sensor, or actuator parameters, programming the system, or for other data entry, system monitoring, system controlling or system debugging purposes, for example as discussed in U.S. patent application no. 10/808,999 filed March 25, 2004, which is based on U.S. provisional patent application no. 60/553,360 filed March 15, 2004, each of which is entitled "Agent Program Environment"; and U.S. patent application no. 10/814,549 filed March 31, 2004 and entitled "System and Method for Interfacing Multi-Agent System", each of which is beneficially assigned to the present assignee and hereby incorporated by reference herein. In alternate embodiments, the HMI 20 is coupled to the network 16 or one or more of the controllers 11,14 by way of the world wide web or internet (not shown). In such embodiments, the HMI 20 can employ a browser program while the distributed control system 10 (or portion thereof, e.g., one of the controllers 11,14) employs a server program, or vice-versa. In some alternate embodiments, the HMI 20 or human-machine interfaces like it could be considered some of the machines 12. The defined HMI functions can be operated by a human operator and/or another machine. The machines 12 shown in FIG. 2 can be organized into a hierarchy to facilitate communication and agent interoperability. Multiple HMIs could exist for convenience (located in areas of most critical need), for redundancy, or for providing multiple views or windows into the system. Also, in certain embodiments, the HMI 20 or multiple HMIs that are employed to interface the distributed control system can employ artificial reality or augmented reality techniques. Augmented reality in particular would provide a basis for presenting large amounts of real-time dynamic data to a human operator in context with the current operating condition of the machinery and in a manner to support the operator's objectives (e.g. control, maintenance, monitoring, surveillance, etc.). Further, the output from the agent-based system could include cues or instructions and suggestions to the human operator. For example, the system might provide instructions or recommendations to other remote staff such as remote maintenance staff, senior operations staff and management, and to other personnel using wireless communication methods (e.g. wireless communications to wearable computers or palm computers).

Referring now to FIG. 3, exemplary hardware components 15 within each of the controllers 11,14 are shown. In particular, the hardware components 15 at each of the controllers 11,14 include a network interface 18 of conventional design for transmitting and receiving messages on the network 16 and communicating them to an internal bus 22 (which typically is a high-speed bus). The internal bus 22 links the network interface 18 with memory 24, a processor 26 and I/O circuits 28, the latter of which provide the I/O lines 30 leading to the machines 12 (or to groupings of the machines or subcomponents of the machines such as sensors or actuators). Depending upon the embodiment, the hardware components of the controllers 11,14 can vary from those shown. In certain embodiments, for example, a secondary communication port is available for connection of the HMI 20. Also, for example, the memory 24 can take a variety of forms and need not include only a single memory device. Further, in certain embodiments, one or more of the controllers 11,14 can employ more than one memory device, including one or more memory devices that are not physically located at the respective controllers, such as memory devices that are located at others of the controllers 11,14 or at other locations with which the respective controllers can be in communication by way of the network 16 or other communication media. Also, in some embodiments, dual-ported memory is used, and redundant communications (e.g., SONET rings) can be employed to further enhance system reliability and performance. The redundancy could be implemented in a ring architecture (e.g. SONET Rings) or in redundant wired network links such as both DeviceNet and Intellibus, or by redundant wired network links (e.g. IEEE 802.11b and IEEE 802.15.4) or a combination of two or more redundant communication links. In certain embodiments, I/O) can also be remote and input/output values can be communicated over wireline or wireless networks. Also, multiple processors, multiple memory banks, and multiple storage and analysis elements can be integrated either manually or automatically (e.g. computer-to-computer linkages).

Software Implemented to Form EMS Agents

Turning to FIG. 4, the hardware components 15 within each of the controllers 11,14 discussed with respect to FIG. 3 operate in conjunction with various software components 25 so as to operate as one or more intelligent agents 50 (which are hereinafter referred to simply as "agents", and also can be termed autonomous control units (ACUs)), such that the distributed control system 10 as a whole operates as a multi-agent system (or "MAS"). Insofar as this multi-agent, distributed control system 10 is employed to control and monitor the component machines of the energy-related system 1, this control system can also be termed an energy management system (EMS). The software components 25 of each of the controllers 11,14 can be stored within the memory 24 of the respective controller (or elsewhere) and executed by the processor 26 of that controller.

Each agent 50 of the EMS is an autonomous cooperative unit that encapsulates application knowledge, and is capable of autonomous, proactive, reactive, and social behaviors in relation to the other agents of the EMS to adapt the distributed control system 10 to different tasks and to adjust in response to the occurrence of unforeseen conditions in relation to operation of the energy-related system 1. Preferably the agents 50 are fault tolerant, particularly insofar as they are capable of detecting failures or anomalies that occur in the energy-related system 1 (and even the EMS itself) and are capable of isolating those failures/anomalies to prevent those failures/anomalies from propagating to other system components. The agents 50 can also detect faults outside the energy-related system 1 by analyzing power characteristics. For example, faults with connected machines and systems such as a motor or a generator can be detected. The system can detect and change EMS configuration or control to minimize damage or protect critical system functions. The EMS can also receive specific fault messages such as in XML format from intelligent devices connected to the power system. For example, an intelligent motor starter, solid state power switch, or soft start such as a Smart Motor Controller (SMC) can send power line fault information to the agents 50. Also, preferably the agents 50 are proactive and periodically (typically asynchronously) propose and implement strategies to enhance system performance or to reduce the likelihood that the system will enter undesirable states. Agents further can possess predictive or prognostic capabilities. These permit agents to change their functions, or to change their performance based upon the likelihood of a failure of one or more degraded components. For example, a controlling agent could elect to operate a degraded machine at ½ speed and load to permit some other weakened component to retain some (limited) capability and to preserve some system capacity as may be needed for a future critical event.

More particularly, each agent 50 is autonomous such that it makes its own decisions, is responsible for carrying out its decisions toward successful completion, and controls and/or monitors the respective machine(s) 12 assigned to it. The agents possess local control to meet mission objectives and to realize local goals. Also, each agent 50 is capable of cooperating with other agents, and capable of adapting and responding to diverse events and mission goals by adjusting its behavior and that of the machine(s) 12 it controls. To enable this cooperation, all of the agents 50 typically share a common language, as discussed further below. Depending upon the embodiment, either one or more than one agent 50 can be employed on each of the controllers 11,14. Often, although not necessarily, the number of agents 50 implemented on a given one of the controllers 11,14 will correspond to the number of machines 12 that are being controlled by way of that controller (as discussed above, each machine 12 can correspond to one or more of, or one or more subcomponents of, any of the energy producers 2, energy production enablers 4, energy consumers 6, and/or energy transporters 8).

FIG. 4 shows in detail one exemplary embodiment of the software components 25 that can be included within the controllers 11,14 so that the controllers are capable of operating as agents. In particular, FIG. 4 shows the software components 25 within a representative one of the controllers, namely, the controller 14. As shown, the software components 25 within the controller 14 forming the agent 50 include an operating system 40, base firmware 42, distributed control agent (DCA) infrastructure firmware 44, application-specific control program software 46, and application-specific agent software 48. Although all of these various components are necessary to form the agent 50 in this embodiment, in alternate embodiments, other software components could be employed instead of these software components. For example, the DCA infrastructure firmware 44 could be combined with the application-specific control program software 46 to form a single software component.

The exact manner in which the distributed controllers 11,14 are programmed (or otherwise configured) to operate as agents can vary depending upon the embodiment of the invention, so long as such distributed controllers are in fact programmed (or otherwise configured) to operate as agents. Nevertheless, in the present embodiment employing the aforementioned software components 25, the operating system 40 can be any of a variety of operating systems or similar programs that are capable of governing low-level operations of the controller 14 and supporting the operation of each of the other software components 25, for example, a conventional multitasking operating system such as the Windows NT operating system.

The base firmware 42 is representative of conventional software programming (typically stored in a read-only memory) that is capable of governing interactions between the controller 14 and devices external to the controller. For example, the base firmware 42 formats signals produced by the agent 50 for communication onto the network 16 so that those signals are in accordance with the protocol of the network (e.g., in accordance with the requirements of an Ethernet, ControlNet or DeviceNet-type network and/or, in some embodiments, the TCP/IP or UDP/IP protocol, or the IEEE802.11b (wireless) protocol), and also is able to receive and process signals received off the network 16, so that the signals can be understood by the agent 50. The base firmware 42 also governs communications between the controller 14 and the machine(s) 12 coupled to the controller by way of the I/O line(s) 30, as well as between the controller 14 and other devices at external organizations (as indicated by arrow 52).

The base firmware 42 also enables the creation and use of (and otherwise supports the operation of) the application-specific control program software 46, which governs the manner in which the agent 50 controls and/or monitors the machine(s) 12 assigned to the agent. The application-specific control program software 46 typically is customized for operation with the particular machine(s) 12 being controlled/monitored by the particular controller 14. Often the application-specific control program software 46 is written in ladder logic code, although depending upon the embodiment this need not be the case.

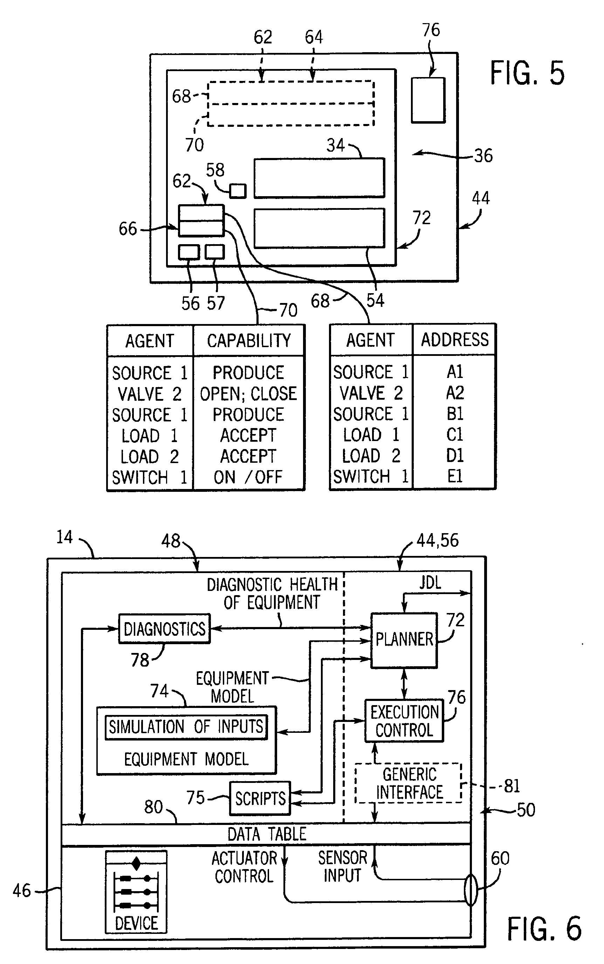

In addition to the operating system 40, the base firmware 42 and the application-specific control program software 46, the software components 25 further include the DCA infrastructure firmware 44 and the application-specific agent software 48. Each of these latter two software components includes programming that governs certain high-level or "agent-type" behaviors of the agent 50. The application-specific agent software 48 is application-specific in that it typically reflects the specific machine(s) 12 that have been assigned to the particular agent 50 to be controlled and/or monitored, and/or the particular distributed application or process with which the agent 50 is affiliated. To properly interact with the specific machine(s) 12 assigned to the agent 50, the application-specific agent software 48 of the agent is capable of interacting with the application-specific control program software 46. In at least some embodiments, such communication between these two software components occurs by way of a data table 80 (see FIG. 6).

The DCA infrastructure firmware 44 operates as an extension of the base firmware 42, particularly to govern, support and facilitate agent-type functionality of the agent 50 in accordance with both the DCA infrastructure firmware itself and the application-specific agent software 48. The DCA infrastructure firmware 44, in contrast to the application-specific agent software 48, governs high-level agent behavior of the agent 50 that is not specific to that agent or its particular responsibilities, and instead is common among multiple agents of the distributed control system 10. The DCA infrastructure 44 is in direct communication with the base firmware 42 (and/or, in certain alternate embodiments, with the operating system 40) and the application-specific agent software 48. Among its many functions, the DCA infrastructure 44 supports multi-threaded communications among the different agents 50 existing at the different controllers 11,14, between the agents of the distributed control system 10 and those of external organizations by way of alternate communication linkages 52, as well as between multiple agents of a single controller when multiple agents are associated with a single controller. To support and conduct these communications, it is the DCA infrastructure firmware 44 that constructs messages for transmission to other agents, and likewise the DCA infrastructure firmware that disassembles received messages for interpretation. Additionally, in the present embodiment, the DCA infrastructure firmware 44 also wraps and unwraps these messages in additional protocol information as discussed further below.

Further, it is the DCA infrastructure firmware 44 that conducts the planning of the agent 50 in terms of determining how it will interact with other agents and how it will control or otherwise interact with the machine(s) 12 under its control. Thus, it is the DCA infrastructure 44 that determines how to negotiate with, and generates bid or bid response messages (and, in some embodiments, bid request messages) for, other agents. In certain embodiments, the DCA infrastructure firmware 44 is priority-based and, particularly where the distributed control system 10 is employed in an industrial environment, the application-layer protocol employed by the DCA infrastructure firmware is a protocol commonly utilized by industrial control systems such as the Common Industrial Protocol (CIP). The DCA infrastructure firmware 44 is typically written in a high-level programming language such as C++ or JAVA, although the language can vary from embodiment to embodiment.

As shown in FIG. 4, in the present embodiment, messages between different agents 50 are scripts communicated in the job description language (JDL), and wrapped in additional formatting information in accordance with a specialized, internationally-accepted communication language, which in the present embodiment is the Foundation for Intelligent Physical Agents (FIPA) Agent Communication Language (ACL). Although the base firmware 42 initially receives incoming messages and processes those messages to remove protocol information specific to communication over the network 16 (e.g., Ethernet protocol information), it is the DCA infrastructure firmware 44 that further processes the received messages to unwrap the JDL information of the messages from the FIPA ACL wrapper and then extract the content of the JDL messages having to do with communication between agents. Likewise, it is the DCA infrastructure firmware 44 that creates agent messages in the JDL language, and wraps those messages in the FIPA ACL wrapper prior to the messages being further configured by the base firmware 42 for transmission over the network 16.

In alternate embodiments, the messages between agents 50 could be in any of a number of other formats or languages other than JDL, such as XML, KQML or HTML. Also, in alternate embodiments, languages other than FIPA ACL could be employed as a wrapper about the messages. Further information regarding the manner of communication among agents is provided in U.S. Patent 6,647,300 entitled: Bidding Partner Cache For Autonomous Cooperative Control System; U.S. Patent 6,459,944 entitled: Self-Organizing Industrial Control System Using A Specific Process To Evaluate Bids; U.S. Patent 6,430,454 entitled: Self-Organizing Industrial Control System Using Iterative Reverse Modeling To Evaluate Bids; U.S. Patent 6,272,391 entitled: Self Organizing Industrial Control System Importing Neighbor Constraint Ranges; and U.S. Patent Application Publication No. 2003/0078678A1 entitled: Language Structure For Autonomous Cooperative Control System, each beneficially assigned to the present assignee and hereby incorporated by reference.

Further Details Concerning Certain Exemplary Software Features

The exact manner in which the agents 50 are programmed to accomplish their various functions as an EMS can take a variety of forms. For example, referring additionally to FIGS. 5 and 6, the DCA infrastructure firmware 44 in certain embodiments includes several software subcomponents 36 for performing certain of its functions. In particular with reference to FIG. 5, these software subcomponents 36 include a planner 72, as well as an execution controller 76. As shown, the planner 72 itself has several software subcomponents of its own. Among these is JDL parsing/integration software 34 that allows the planner 72 to generate JDL messages for communication to other agents, and to receive and process JDL messages from those other agents. Further, the planner 72 includes FIPA ACL wrapping/unwrapping software 54 that applies and removes the FIPA ACL protocol information with respect to the JDL messages. Additionally, the planner 72 also includes algorithms that determine how the agent 50 generates and submits bids and bid responses (and, in some embodiments, bid requests), and/or otherwise negotiates with other agents, by way of negotiation algorithm software 56. In some embodiments, the planner 72 further includes subcontracting management algorithm software 57 by which the agent 50 interacts with other agents to satisfy portions of jobs that the agent itself cannot satisfy.

Further as shown in FIG. 5, in the present embodiment the planner 72 additionally interacts with one or more directory facilitators 62, which are resource locators by which the agent 50 is provided with information about other agents of the distributed control system 10 and about their capabilities and/or the capabilities of the machines 12 with which those agents are associated. To increase the robustness of the overall multi-agent system, in the present embodiment the directory facilitators 62 employed in the distributed control system 10 as a whole (not just the specific controller 14) include both one or more global directory facilitators (GDFs) 64 and one or more local directory facilitators (LDFs) 66, and these typically are part of the DCA infrastructure firmware 44 as permanent generic components. The LDFs 66 generally store information that is of interest to the particular controller(s) or agent(s) with which the LDFs are respectively associated, while the GDF(s) 64 generally store information that is of interest to the entire distributed control system 10 or of interest at least to sections of the distributed control system that encompass multiple LDFs 66.

Typically, the distributed control system 10 includes a respective one of the LDFs 66 at each of the controllers 11, 14, while the distributed control system only has a lesser number of the GDFs 64, for example, a single GDF located at one of the controllers 11,14 or at another location in communication with the controllers. In some embodiments, several GDFs 64 associated with certain sections of the distributed control system 10 will be located at more than one of the controllers 11,14, although in such embodiments some of the controllers will be without GDFs such that the number of GDFs will still be less than the number of LDFs 66. Since each controller 11, 14 typically has its own LDF 66 but not its own GDF 64, the GDF shown in FIG. 5 is shown by way of a dashed line. In alternate embodiments, more than one GDF 64 can be employed at one or more of the controllers 11,14, or more than two-levels of directory facilitators can be employed in the distributed control system 10 (e.g., there could be local, intermediate, and global directory facilitators).

Each of the LDFs 66 and GDFs 64 of the planner 72 of the DCA infrastructure firmware 44 provides a cache-like storage area. The LDF(s) 66 associated with a given agent typically are accessible by the other portions of the planner 72, the DCA infrastructure firmware 44, and the application-specific agent software 48 of that agent. Since the GDF(s) 64 typically serve more than one of the agents and potentially can serve each of the agents of the distributed control system 10 (and even possibly other agents of external organizations), the GDF(s) serve as a central clearinghouse of agent-related information that can be selectively downloaded to the multiple LDFs of the distributed control system associated with the multiple agents. Typically, when the agent 50 and other agents of the distributed control system 10 are initialized during development or deployment (or when a new agent is spawned or initialized or realized), of the multi-agent system to form the EMS, each agent emits a registration message to its corresponding LDF 66. The LDF 66 in turn registers the new agent in the GDF 64 so that the information can later be used to match bids/requests with the capabilities of agents.

Further description of LDFs and GDFs is provided in U.S. patent application no. 09/621,718 entitled "Global Resource Locator for Autonomous Cooperative Control Systems", which is beneficially assigned to the present assignee and hereby incorporated by reference. Although, in the present embodiment, the directory facilitators 62 are described as being subcomponents within agent programming, in other embodiments, some or all of the directory facilitators 62 constitute agents in their own right, such that the directory facilitators handle inter-agent communication in accordance with agent communication protocols.

Further as shown in FIG. 5, in certain embodiments each of the directory facilitators 62 of the DCA infrastructure firmware 44 includes a first, "white pages" portion 68 and a second, "yellow pages" portion 70. The first portion 68 of each of the directory facilitators 62 specifically includes information correlating the names/identities of different agents that exist within the distributed control system 10 (or even, possibly, agents that are in external organizations) with addresses/locations of those agents. This information allows the agent 50 to properly direct messages intended for specific agents to the addresses of those agents. For example, the first "white pages" portion 68 of the LDF 66 shown in FIG. 5 shows six agents having five addresses. In that example, the addresses of two of the agents have the first character "A", indicating that those two agents are located at a single one of the controllers 14 that corresponds to "A".

The second portion 70 of each of the directory facilitators 62, in contrast, includes information about the capabilities of the different agents that exist within the distributed control system 10 forming the EMS (or even, possibly, agents that are in external organizations) and/or the machines 12 of the energy-related system 1 (or external entities) with which those agents are associated. Thus, when the agent 50 desires to find agents that are capable of providing certain services, the agent is able to consult the second portion 70 to identify such agents. An example of the information contained in the second, "yellow pages" portion 70 of the LDF 66 shown in FIG. 5 shows five agents 50 having capabilities corresponding to the machines 12 that are controlled/monitored by those agents. For example, one of the agents corresponding to a valve (e.g., of an energy production enabler 4) has a capability of opening or closing, while each of the agents corresponding to a load (e.g., of an energy consumer 6) has a capability of accepting (consuming) resources, each of the agents corresponding to a source (e.g., of an energy producer 2) has a capability of delivering or producing a resource, and an agent corresponding to a switch (e.g., of an energy transporter 8) has a capability of turning on or off.

Further as shown in FIG. 5, in the present embodiment a capability matcher 58 is provided that monitors communication patterns among different agents and identifies, by way of learning protocols, groups of agents or "communication clusters" that frequently communicate with one another in certain contexts, for example, to address certain issues that repeatedly occur (e.g., repeating trends in energy consumption), or for other reasons. Where communication clusters are identified, the capability matcher 58 modifies the information stored within the LDFs 66 or GDFs 64 in a manner such that the agents follow special context coordination protocols when certain circumstances arise or in certain contexts, for example, the ContractNet protocol. By operating in accordance with such protocols, the agents tend to modify their communication and negotiation behavior in ways that result in a reduction in the number of signals that are sent among agents and processed. This in turn reduces the amount of communication that occurs among agents and increases the speed of collaborative decisionmaking among the agents. For example, in certain embodiments, upon identifying a communication cluster associated with a particular operational context, the capability matcher 58 will store only the addresses of certain agents of the communication cluster in one or more of the directory facilitators 62 (or caches associated therewith). Consequently, agents operating in accordance with context coordination protocols will tend to contact or communicate only with other agents in that communication cluster and ignore agents outside the cluster.

The operation of the capability matcher 58 in identifying appropriate communication clusters is based upon historic behavior of the agents of the distributed control system forming the EMS, and is continually updated as the distributed control system continues to operate. That is, the capability matcher 58 is constantly analyzing agent interactions to determine preferred communication and collaboration patterns among the agents to address various process issues, to identify new communication clusters and modify previously identified communication clusters. As the capability matcher 58 identifies new patterns and changes in old patterns, it modifies the information stored in the GDFs/LDFs to conform to these evolving patterns. In certain embodiments, it is presumed that communication cluster information is only accurate for a limited period of time, and consequently information corresponding to certain communication clusters is only retained in the GDFs/LDFs for such limited amounts of time and then deleted (e.g., upon the expiration of timers).

The exact amount and types of communication among the LDF(s) 66 and GDF(s) 64 can vary depending upon the particular characteristics of the EMS and the particular energy-related system being controlled. In certain embodiments, the LDF(s) 66 regularly communicate with the GDF(s) 64 and provide information thereto, by way of a periodic, "heart-beating" signal or "sanity" check. By providing such regular communications between the LDF(s) 66 and the GDF (s), the robustness of the system is increased. In other embodiments, the LDF(s) 66 communicate with the GDF(s) 64 on an asynchronous basis, e.g., only when relevant data is received by the LDF(s) that should be transmitted to the GDF(s) and when data from the GDF(s) is needed by the LDF(s). It should be noted that, while an architecture employing a two-level structure of directory facilitators 62 (the LDFs 66 and the GDFs 64) is discussed in particular herein, other architectures employing only one-level of directory facilitators or more than two levels of directory facilitators can also be utilized depending upon the embodiment.

When new agents are created, agent address and capability information is first provided to the LDF(s) 66 corresponding to those agents. The degree to which this information concerning new agents is passed from those LDF(s) corresponding to the new agents to the GDF(s) 64 and/or to other LDF(s) can vary depending upon the embodiment, and in particular can depend upon whether the directory facilitators 62 are programmed to perform breadth propagation, depth propagation or no-knowledge propagation. LDF(s) 66 employing the breadth propagation technique automatically communicate information regarding new agents to the GDF(s) 64 above them, and no further communication takes place. In the case of depth propagation, LDF(s) 66 communicate information to their corresponding GDF(s), which in turn communicate that information to all of the other LDFs and/or GDFs of the distributed control system. As for no-knowledge propagation, this refers to behavior in which the LDF(s) 66 receiving new information do not pass that information on to any other directory facilitators. Then, when a search is requested of a LDF 66 following no-knowledge propagation, the search is first processed locally at that LDF and then, if the LDF lacks appropriate information, the search is then passed on to other directory facilitators.

As for the execution controller 76, this portion of the DCA infrastructure firmware 44 operates as an intermediary between the application-specific control program software 46 and the planner 72, and effectively translates plans of the planner into commands that can be synchronized with, understood by and followed by that control program software. The execution controller 76 also monitors events of the application-specific control program software 46 and, when appropriate, is capable of providing response-context events and other information back to the planner 72 regarding the status of the control program software. Depending upon the embodiment, the execution controller 76 can utilize polling to monitor events of the control program software 46, or alternatively can utilize event driven monitoring.

Turning to FIG. 6, the planner 72 of the DCA infrastructure firmware 44 is in direct communication with three different subcomponents of the application-specific agent software 48, namely, an equipment model 74, application-specific agent scripts 75, and a diagnostics portion 78. Additionally, the execution controller 76 of the DCA infrastructure firmware 44 is also in communication specifically with the application-specific scripts 75. In the present embodiment, the scripts 75 are written in the JDL language, while the remainder of the application-specific agent software 48 (like the DCA infrastructure firmware 44) is written using a high-level programming language such as C++ or JAVA, although in other embodiments these portions of the application-specific agent software can take other forms.

The scripts 75 are application-specific agent program instructions that can be accessed by the execution controller 76 and the planner 74 (typically, by way of two dedicated threads) as those subcomponents, respectively, determine how to perform certain operations in relation to the application-specific control program software 46 and the controlled machine(s) 12, and plan regarding what actions should be taken in the future in relation to other agents (e.g., whether to initiate bidding) and/or in relation to the application-specific control program software/controlled machines. The equipment model 74 possesses models for use by the planner 72 in evaluating different operational configurations, as well as metrics for those configurations. These models and metrics take into account the characteristics of the particular machine(s) 12 that are being controlled by the agent 50, for example, whether the machine is an energy producer, production enabler, consumer or transporter 2, 4, 6 or 8, respectively. Thus, the equipment model 74 provides information that allows the planner to make decisions related to the capabilities of the agent 50 and its assigned machine(s) vis-à-vis the other agents of the EMS and other machines controlled thereby.

With respect to the diagnostics portion 78, this portion of the application-specific agent software 48 is in communication with the machine(s) 12 that are being controlled and monitored by the agent 50, by way of the control program software 46. The diagnostics portion 78 provides the capability of detecting equipment failures, isolating failures from propagating, and periodically or asynchronously proposing strategies to enhance system performance or avoid undesirable states. To allow it to evaluate the status or health of the machine(s) 12, the diagnostics portion 78 includes one or more models of the machine(s), for example, modeling of the energy producers 2 and energy consumers 6. In certain embodiments, the diagnostic portion 78 additionally includes a suite of data acquisition, signal processing, diagnostic, and prognostic algorithms. These algorithms describe machinery and process health such as machinery fault detection, degraded operation, and failure prediction. Further, in some embodiments the diagnostics portion 78 includes algorithms that facilitate a system recovery subsequent to a system failure. Also, in certain embodiments, the diagnostics portion 78 can receive diagnostic information from other agents or from outside the system (e.g., from other smart machines or sub-systems) and use this information directly or combine this information with local diagnostic information. Further, although not shown in FIG. 6, in certain embodiments one or both of a prognostics portion and a simulation portion exist apart from the diagnostics portion 78 (or exist as portion(s) thereof). Such a prognostics portion enables the generation of predictive/prognostic information that in turn permits the taking of actions before a failure or fault occurs, which in certain circumstances can make it possible to avoid damage to machinery or process disturbances. Similarly, this mechanism can detect and alter configuration and control to avoid wear (such as gear wear or insulation breakdown) and avoid accelerated wear conditions and to prevent early machinery wear. As for the simulation portion, such a portion enables the EMS to test or simulate how particular actions would affect the energy-related system 1 before actually taking such actions. Dynamic optimization can also be employed. For example, the agents 50 of the EMS can monitor whether the energy-related system 1 operates as expected in response to system changes (both in terms of the steady state response and dynamic reaction of the system). The techniques employed to perform such dynamic optimization can include a variety of techniques such as, for example, gradient searching. Such techniques can be employed, for example, to achieve a specific optimum operating state or operation point or, alternatively, the agent-derived control and configuration can be prescribed to optimize machinery operation over a specific operating horizon such as one month.

FIG. 6 additionally shows a particular, preferred mechanism for allowing communications to occur among the application-specific control program software 46, the agent-type programming including each of the application-specific agent software 48 and the DCA infrastructure firmware 44, and the machine(s) 12 controlled by the agent. As shown, in this embodiment, the execution controller 76 and the diagnostics portion 78 of the DCA infrastructure firmware 44

and the application-specific agent software 48, respectively, each are able to communicate with the application-specific control program software 46 by way of a data table 80. In some embodiments, the communication between the execution controller 76 and the data table 80 occurs by way of an additional, generic interface 81 of the DCA infrastructure firmware 44, which is shown in dotted lines to indicate that it is present only in some embodiments. Additionally, sensor signals received from, and actuator/control signals provided to, the controlled machine(s) 12 (collectively shown as input/output signals 60) are provided to and from the application-specific control program software 46 by way of the data table 80 as well.

The data table 80 can be of a standard form as is conventionally available as a data storage area in a conventional industrial controller or similar controller, e.g., the memory 24 shown in FIG. 3. The data table 80 allows communication between the application-specific control program software 46, the application-specific agent software 48/DCA infrastructure firmware 44, and the I/O signals 60 by providing an array of memory locations that can be monitored and changed by each of the application-specific control program software 46, the diagnostics portion 78, the execution controller 76, and the machine(s) 12 by way of the I/O line(s) 30. In alternate embodiments, the data table can be implemented as an index or indexed-hierarchical database. Such a database could support a contemporary database structure (e.g. relational DB) and support a real-time database interface.

In a preferred embodiment, communication between the application-specific control program software 46 and the application-specific agent software 48/DCA infrastructure firmware 44 occurs as follows. The application-specific control program software 46 monitors values that can be changed by the diagnostics portion 78 or execution controller 76. When these values are varied, the control program software 46 observes this to be the case and accordingly changes its operation in response. Thus, the diagnostics portion 78 or execution controller 76 can control operation of the control program software 46 simply by varying values.

To the extent that the diagnostics portion 78 or execution controller 76 needs to be able to monitor operation of the control program software 46 and the machine(s) 12 controlled thereby, a different process is used. More specifically, to allow the control program software 46 to notify the diagnostics portion 78 or execution controller 76 that a value associated with the control program software or machine(s) 12 has changed, the diagnostics portion/execution controller is provided with a special thread that monitors values that are of interest. Then, whenever one of those values changes, an internal notification message is sent to the diagnostic portion 78/execution controller 76 (in FIPA notation, this could also be a subscribe service).

Because of the data table 80, the overall agent 50 (and particularly those of the software components 25 performing agent-type behavior, namely, the DCA infrastructure 44 and the application-specific agent software 48) is capable of not only interacting with the application-specific control program software 46 and the I/O 60 (and thus the controlled machine(s) 12), but also is capable of making decisions based upon these interactions as well as decisions about how to further interact with the application-specific control program software and I/O (and thus the controlled machine(s)). In particular, upon receiving data and other information (e.g., event information) provided to the data table 80 by the control program software 46 and I/O 60, the application-specific agent software 48 is able to match such received information with one or more of the application-specific agent scripts 75. These scripts 75 in turn further indicate other actions for the agent 50 to perform, and thereby are capable of "gluing" events or data with specified agent functions. Such other actions can include, for example, sending further data, control signals or other information (including, for example, other event information) to the data table 80 for receipt by the application-specific control program software 46, the I/O 60 and ultimately the controlled machine(s) 12, as well as causing interactions between the agent 50 and other agents, such as initiating bidding with other agents.

_EMS_ Behavior

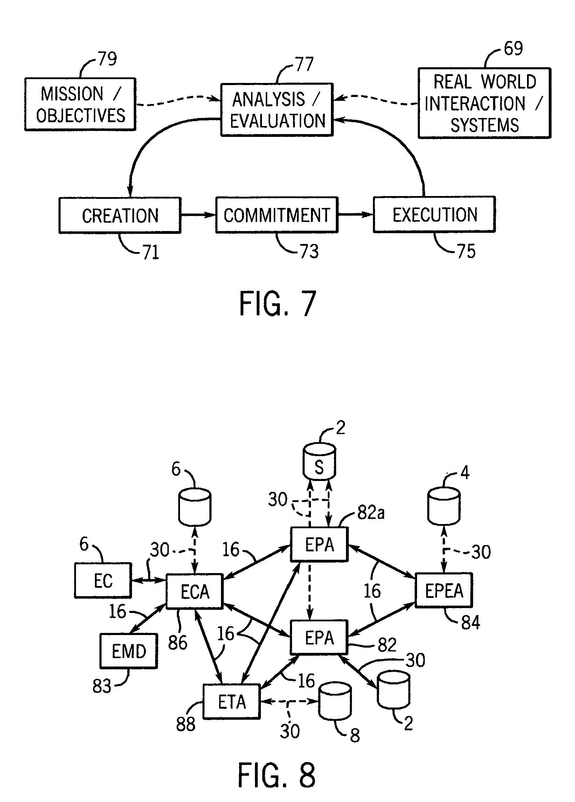

Once the controllers 11,14 of the distributed control system 10 are programmed with the software components 25 (and any necessary related data), the distributed control system 10 is capable of operating as a MAS and, more particularly, as an EMS. That is, the agents 50 are capable of intercommunicating to organize themselves to control the energy-related system 1. Preferably, by virtue of the agents' respective self-governing operation as well as their interactions with one another, the agents are able to explore a variety of alternatives to manage, control and react (typically, though not necessarily, in real time) to conditions, needs, and anomalies of the energy-related system 1 and portions thereof, as well as of the EMS itself and possibly external devices in addition. As a result, the agents are able to control the operation of the energy-related system 1 in a manner that is efficient and otherwise desirable, both in terms of meeting local, system-wide and even external requirements. The interoperation of the agents 50 of the EMS typically occurs in accordance with a process shown generally in FIG. 7 and discussed in further detail with reference to FIGS. 8-9.

As shown generally in FIG. 7, the operation of agents 50 of the controllers 11,14 of the distributed control system 10 when operating as the EMS (including, possibly, multiple agents at any given controller and/or agents at external organizations) can be understood generally to include several phases in which the agents communicate with one another to collaboratively address system needs. These phases are a creation (or planning) phase 71, a commitment phase 73, an execution phase 75, and an analysis/evaluation phase 77. In the present embodiment, these communications among the agents are in the JDL language, although in alternate embodiments other languages can be used.

Also, in certain embodiments, the ContractNet protocol is used to perform these dynamic negotiations.

During the creation (or planning) phase 71, one or more of the agents 50 of the EMS initiate a collaborative decision-making process. Typically, this occurs when one or more of the agents determine that a system need has arisen, for example, when one or more of the agents associated with one or more of the energy consumers 6 determine that a need has arisen for an increased amount of energy. As the collaborative decision-making process among the agents 50 proceeds, eventually a satisfactory solution is identified or, in the case of multiple possible solutions, a preferred solution (and typically a transition plan) is identified. This satisfactory solution or plan can involve a variety of state changes in terms of the states of components of the energy-related system 1 (as well as the EMS), for example, the turning on and off of different components, and even can be a transition plan involving a series of intermediate state changes or steps. Upon identifying such a satisfactory or preferred solution, the agents 50 of the EMS determine whether to commit their resources to complete the work in the future in accordance with that solution, in the commitment phase 73. Once a commitment is made, the commitment phase 73 is completed and the agents 50 then enter the execution phase 75. Typically this will be done in a synchronous manner. A sentinel, trigger signal, or time-synchronous schedule is defined and execution is initiated in a synchronous manner as required and with appropriate time synchronous resolution (i.e. within defined time limits, a small amount of time dither or clock variation is permitted to insure that synchronous events are initiated at virtually the same time). It is during this phase that the agents 50 then carry out execution of the plans. The communication and negotiations among the agents 50 of the EMS can occur, depending upon the embodiment, in a synchronous or an asynchronous manner (or both). Finally, after (or during) the execution phase 75, the agents 50 of the EMS operate in accordance with the analysis/evaluation phase 77, during which the agents determine how the energy-related system 1 (as well as possibly the EMS itself) are performing and determine whether adjustments need to be made. As further shown in FIG. 7, these determinations are made typically based in part upon mission(s)/objective (s) 79 (which set a context) of the agents and/or upon information (e.g., sensed information) regarding real world interaction/system behavior 69 of the energy-related system 1, which can include for example sensed information input from sensors, external system input, database information or information from the internet (including building system design information such as specification and drawings). The analysis phase can be extensive and include, for example, a determination of whether the system responded as anticipated. Among the questions that can be answered/addressed during the analysis phase are questions regarding for example, whether the system achieved the planned operating state, whether the operating state was realized within the planned time frame, whether the system is in a limit cycle, whether the system is driving toward instability, whether the system is operating in a brittle state or borderline unstable condition (e.g. whether it takes a relatively long time for a disturbance to dampen out and no longer affect system operation). Depending upon the embodiment, the mission(s)/objective(s) 79 can be set in a variety of different ways such as by, for example, an operator using the HMI 20 or, alternately, a separate (typically, higher-level) agent having the responsibility of setting and communicating such missions/objectives/goals. The mission(s)/objective(s)/goal(s) of one or more components of the energy-related system 1 or the system as a whole, or of one or more agents 50 of the EMS or of the EMS as a whole, can change dynamically based upon, for example, external inputs or state information, including state information from lower-level agents. Further, in some embodiments, the sensors can be embedded in equipment such as the valves, producers, consumers and/or pipes. In addition, some sensor values can be determined using virtual sensors or synthesized values such as obtained with simulation, physical models, or casual models or analytical methods such as artificial neural networks. Outside information can be obtained from databases, tables, expert systems or analytic tools accessed via an intranet or the internet. Information that can be accessed might include, for example, outside information on current and projected work schedules, product or energy demands, component or material specifications, repair cost and availability, outside energy cost, and even people or robots involved with the energy system (e.g., their location could be determined via wearable GPS units and radio links as are readily available today.)

Although it is possible that all of the agents 50 of the EMS may be involved in each occurrence of the creation phase 71, commitment phase 73 and execution phase 75, in many circumstances only some of the agents 50 are involved in any given one of these phases. For example, an identified solution often will only require commitment from and/or execution by a subset of the agents 50 and, in such cases, the agents of the subset may be the only agents that proceed through the commitment and execution phases 73,75. Also, in some circumstances in which only certain agents associated with certain of the machines 12 are initially involved in the creation phase 71, others of the agents can nevertheless become subsequently involved as subcontractors, for example agents associated with energy production enablers 4 as set forth in more detail below with respect to FIGS. 8-9. Such subcontracting can occur through the use of the subcontracting management algorithms 57 implemented by the agents.

In some embodiments the commitment phase 73 begins and is completed immediately or nearly immediately upon completion of the creation phase 71. However, in other embodiments, the agents remain in the commitment phase for a significant amount of time. This can be the case, in particular, where scheduling of agent operations is important. In these circumstances, it sometimes is desirable for agents to delay the commitment of their resources for periods of time before finally committing those resources, to retain the options of utilizing those resources for various different operations. Thus, in these embodiments, agents are provided with an additional degree of freedom of operation insofar as the agents need not instantaneously decide how they wish to commit their resources during the commitment phase 73. For example, there exists the possibility that the agents can define a new plan (e.g., a contingency plan in the event of a particular failure) and wait for a specific event or trigger to initiate the plan. Further for example, the plan could be a failsafe plan that can be quickly implemented to safeguard machinery or processes. After attaining the near-term failsafe state, a more extensive search could then be initiated for a more desirable or more optimum operating condition.

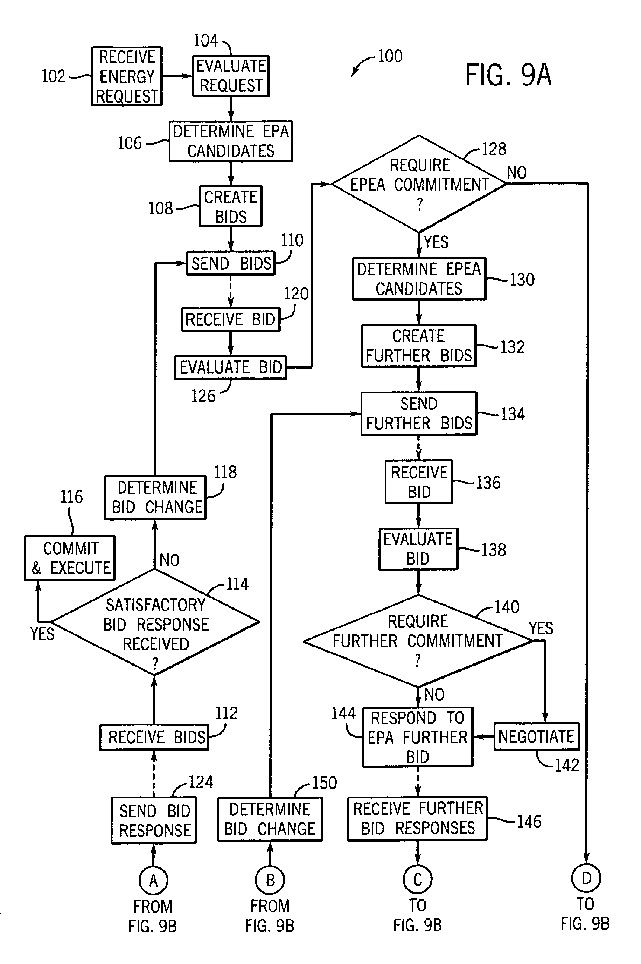

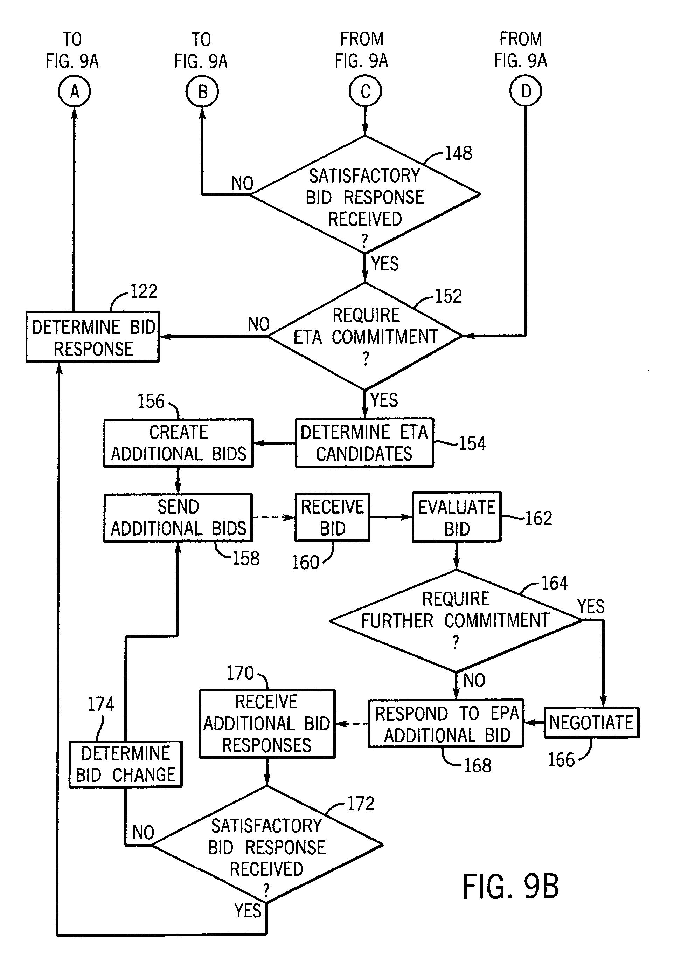

Turning to FIGS. 8 and 9, exemplary operation of the agents 50 of the EMS to control the energy-related system 1 is shown in more detail. In particular, with reference to FIG. 8, the agents 50 of an EMS intended to control/monitor an energy-related system 1 having energy producers 2, production enablers 4, consumers 6 and transporter 8 can be viewed as including four corresponding types of agents that are in communication with one another via the network 16, namely, energy producer agents (EPAs) 82, energy production enabler agents (EPEAs) 84, energy consumer agents (ECAs) 86, and energy transporter agents (ETAs) 88, each of which monitors and/or controls (or contributes to the monitoring and/or controlling of) one or more of the energy producers, energy production enablers, energy consumers and energy transporters, respectively, by way of the I/O lines 30. The application-specific agent software 48 of each of these different types of agents is configured to allow the different types of agents to negotiate among themselves regarding the generation, distribution and/or consumption of energy, in a negotiation process 100 shown in FIG. 9.

Referring, then, to FIG. 9 (in addition to FIG. 8), the negotiation process is initiated among the agents 50 of the EMS at a step 102 when one of the energy consumers 6 notifies its corresponding ECA 86 that it requires energy, typically by communicating an event to that ECA (or due to the ECA otherwise sensing or determining that such a need has arisen). Upon receiving such an energy request, the ECA 86 evaluates the event based upon local data at a step 104. The evaluation by the ECA 86 can include verification of the need for energy as well as an assessment of conditions of the energy consumer process and equipment that are requiring the energy. In some circumstances, the ECA 86 can also consult with other informational resources to perform its evaluation. Such other information resources can include, for example, an energy management database (EMD) 83 as shown in FIG. 8, which can store and provide information regarding new regulations 13 that restrict or otherwise impact the consumption of energy under specific situations (and, in certain embodiments, can also store a variety of other information about the energy-related system 1 and the agent-based distributed control system 10 forming the EMS, including information provided by way of the directory facilitators 62 discussed above). Although not performed in all embodiments, the evaluation by the ECA 86 typically is a useful exercise insofar as it helps to ensure quality of the energy management process on a localized basis.

Upon determining (or, in the absence of an evaluation, upon assuming) that an energy request event is valid and feasible, the ECA 86 determines which (if any) of the EPAs 82 might be worth contacting to address this energy need, at a step 106. Although the ECA 86 could contact all of the EPAs 82 with which it is in communication via the network 16 (or via other communication links), typically the ECA will determine a subset of all of the possible EPAs that are worth contacting. The ECA 86 can make such a determination utilizing information in the LDFs 66 or GDFs 64 discussed above or by way of other resources providing information regarding possible candidates for providing energy. Also, cost considerations or information such as that available at the EMD 83 concerning applicable regulations 13 can influence the ECA's determination. In certain circumstances the ECA 86 also is capable of determining whether the required energy should be supplied by groupings of EPAs rather than individual EPAs 82. Also, in some circumstances, multiple ECAs 86 associated with multiple energy consumers 6 are able to collectively and concurrently communicate and work together to identify possible ways of addressing all of their energy needs as a group.

Once the ECA 86 has determined which of the EPAs 82 to contact, the ECA creates one or more bids for energy at a step 108 and then sends those bids to the appropriate EPAs at a step 110. Each bid typically specifies both a price that the ECA 86 is willing to pay for a given amount of energy (or price per unit energy), as well as an amount of energy that is desired and, in certain circumstances, further information regarding characteristics of the desired energy (e.g., frequency, phase and/or number of phases, voltage, current level, peak power level, average power level, power quality, harmonic content, duration, timing constraints, power "cleanness", power "stiffness", limits on surges, sags and spikes, transient limits, reliability, confidence/reliability of providing all the power requested, etc.). To the extent that there are multiple desired characteristics or constraints, some of these can be "soft" characteristics/constraints (which need not be met or least need not be met exactly) while others can be hard characteristics/constraints (which need to be met), or there can be weightings assigned to the different characteristics/constraints allowing for determinations to be made as to the relative importance of the different characteristics/constraints and thus providing a guide in evaluating the relative desirability of responses to the bids. Although the ECA 86 can submit identical bids to different EPAs, the ECA is also capable of submitting different bids to different EPAs based upon the information the ECA has about those different EPAs. In the present embodiment, multiple bids can be sent out at the same time, or within a time window of one another, by the ECA 86. The ECA 86 in turn is able to receive and collect responses from the different EPAs 82 as they arrive, e.g., within a particular time window associated with the sending of the multiple bids, at a step 112. Although in the present embodiment multiple bids can be sent out to different EPAs 82 simultaneously, in alternate embodiments the ECA 86 waits for a response from the EPA to which a bid has been sent before sending another bid to another EPA.

In such a scenario, the ECA 86 can choose to avoid sending out further bids to other EPAs 82 once the ECA 86 has received a satisfactory bid response. Further, in some embodiments, the EPA 82 can provide a preliminary or "approximate" response that is the result of a simulation or heuristic that estimates the optimum cost to achieve the complete operating requirement over a prescribed time horizon. Artificial intelligence techniques (such as the "A* algorithm") or other cost estimation functions can be employed by the EPA to determine the appropriate bid response. The ECA can then evaluate bid responses not only by a fixed point state cost estimate but by a more comprehensive estimate of the total cost to provide the needed resources over a particular time period.

As the ECA 86 receives and collects responses, the ECA further evaluates whether any of the responses are satisfactory and, if so, which of the responses is preferred, at a step 114. Upon determining that a particular bid response is satisfactory and/or preferred, the ECA 86 finalizes the relationship with the EPA 82 providing the bid response, by committing to the plan represented by the bid and bid response and submitting an execution request to the EPA, at a step 116. However, when no bid responses have been received that are satisfactory, the ECA 86 can modify the bid(s) being sent out, at a step 118, for resending at the step 110 such that the process is repeated. Such modifications of the bid(s) can entail raising the price, changing the quantity, changing other characteristics of the bid, or even changing the determination regarding which of the EPAs are appropriate candidates for negotiation. Although not shown expressly in FIG. 9, when no bid responses have been received that are satisfactory, the ECA 86 also can alternately cease to attempt to satisfy the energy request and "give up".

When one of the EPAs 82 receives a bid from the ECA 86 at a step 120, the EPA then proceeds to perform several operations as are discussed below in relation to steps 126-134, 146-158 and 170-174 to obtain sufficient information to allow the EPA to determine an appropriate response to the bid at a step 122. Upon determining an appropriate bid response at the step 122, the EPA 82 then sends the response back to the ECA at a step 124. The response from the EPA 82 can take any of several forms. First, for example, the EPA 82 can accept the bid when the bid price is acceptable and the energy producer 2 with which the EPA 82 is associated is capable of providing the requested energy. Typically, in the event that the EPA 82 provides a bid response that is an acceptance back to the ECA 86, this establishes a promissory relationship between the ECA and the EPA involving the transfer of energy from the energy producer 2 to the energy consumer 6 associated with those agents. As noted above, such a relationship is not finalized until such time as the ECA 86 commits to the bid response and submits an execution request at the step 116.

Although a bid can be accepted by the EPA 82, the EPA can also take alternative actions. For example, the EPA 82 can reject the bid because the price is too low or because the energy producer 2 with which the EPA 82 is associated is incapable of providing the requested energy. Further, although not shown in FIG. 9, in certain embodiments the EPA 82 can send a counterbid to the ECA 86 that submitted the bid. Typically, such a counterbid will involve an increased price, for example, in a situation where the energy producer 2 with which the EPA 82 is associated is able to provide the requested energy but only by shedding some other load or by operating in a higher-cost manner (e.g., an overloading of production). Alternatively, such a counterbid could involve an increased price but also involve secured energy production for a requested period of time.

To enable the EPA 82 at the step 122 to determine an appropriate response to the bid of the ECA 86, the EPA 82 and additionally (in at least some circumstances) one or more of the EPEAs 84 and ETAs 88 perform several operations shown in FIG. 9 as steps 126-174. To begin with, upon receiving a bid at the step 120, the EPA 82 first evaluates the bid at the step 126. In evaluating the bid, the EPA 82 can consider a variety of factors including, for example, the EPA's own local data regarding the energy producer 2 that it is monitoring/controlling, as well as relevant regulations 13 from the EMD 83 or from another similar database or information resource. Although each EPA 82 is associated with one or more of the energy producers 2, as indicated by FIG. 8, it is possible that two or more EPAs (e.g., the EPA 82 shown in FIG. 8 along with a second EPA 82a also shown in FIG. 8) will be in communication with and contribute to the monitoring/controlling of a shared energy producer marked "S" in FIG. 8. In such circumstances, each of the EPAs 82 that are sharing the shared energy producer must also consult with the energy producer in determining how to respond to received bids, to determine whether the energy producer's operational capabilities or circumstances have changed due to its relationships with other EPAs.

Additionally, at a step 128, the EPA 82 also determines whether communications and negotiations with one or more of the EPEAs 84 are necessary to satisfy the requirements of the bid from the ECA 86. In particular, in some circumstances, the EPA 82 cannot guarantee that it could provide a requested amount of energy set forth in a bid without a further commitment that one or more of the energy production enablers 4 are capable of supplying appropriate amounts of additional materials or other resources to the energy producer 2 with which the EPA is associated. If such a further commitment from one or more of the EPEAs 84 is necessary, then the EPA 82 determines at a step 130 which of the EPEAs 84 are appropriate candidates for being sent bids. As with respect to the determination of EPA candidates made at the step 106 by the ECA 86, the EPA 82 can determine appropriate EPEAs 84 using a variety of information, including information available at the LDFs 66 and GDFs 64 or, in alternate embodiments, can simply presume that all EPEAs (or at least all EPEAs that are physically coupled to the energy producers 2 associated with the EPA making the determination) are appropriate candidates.

Once the appropriate EPEAs 84 have been determined, the EPA 82 creates further bids for the EPEAs at a step 132 and then sends out these further bid(s) to one or more of the EPEAs 84 at a step 134. The further bids concern additional materials or resources that would be needed by the energy producer(s) 2 controlled by the EPA 82 to satisfy the requested bid from the ECA 86, and typically set forth price, quantity and/or other information of relevance such as timing constraints related to obtaining such materials or other resources. As shown in FIG. 9, upon receiving a further bid from one of the EPAs 82 at a step 136, the EPEA 84 receiving the further bid evaluates that further bid at a step 138 to determine whether to accept or reject the bid, propose a counterbid, or take other action based upon various information and other factors, including, for example, information obtained from its corresponding energy production enabler(s) 4.

Additionally, as shown by a step 140, in some circumstances, the given EPEA 84 is not able to accept (or is not able to determine whether it can accept) the further bid without one or more commitments from still other agents such as one or more other EPEAs. Such commitments can include, for example, commitments from other EPEAs to provide additional resources required by the energy producer(s) 2 corresponding to the EPA 82 providing the further bid to the EPEA 84 if those energy producer(s) are to satisfy the needs specified in the original bid from the ECA 86. When further commitments are required by the EPEA 84, that EPEA can enter into additional negotiations with other agents (such as other EPEAs) in order to achieve such commitments, as represented in FIG. 9 by a step 142. Such negotiations can be conducted in essentially the same manner as negotiations are conducted between the ECA 86 and EPA 82 and between the EPA 82 and the EPEA 84. Depending upon the circumstances, such negotiations can result in the establishment of chains of multiple EPEAs 84 that are linked with one another in terms of successive plans and/or commitments, or chains of EPEAs and/or other agents. The chains or threads of agents who can participate in a solution are recorded and the chain reviewed/traversed to prevent duplication agent allocation and circular logic or configuration loops. Also, in some circumstances, the EPEA 84 or other EPEAs can attempt to "renegotiate" commitments that already exist between the respective EPEA and other agent(s), to make available resources that were previously committed. The planning process is carried out in a promissory manner using forecasted conditions including forecasted loads. In addition, stochastic loads, environmental conditions, potential component failures, external disturbances and potential missions can also be consider in the planning process.

If no further commitments are required by the EPEA 84 at step 140 or, alternately, if such further commitments are required and have been achieved by way of the step 142 (or, if attempts to achieve further commitments have been attempted but failed), the EPEA 84 then determines its appropriate response to the further bid of the EPA 82 and provides that response to the EPA, at a step 144. This response from the EPEA 84, along with other responses from other EPEAs provided in response to other further bids submitted at step 134, are collected by the EPA 82 at a step 146. The EPA 82 at a step 148 in turn determines whether the response to the further bid that has been received is satisfactory or, if multiple bid responses are received, whether any of those responses are satisfactory and, if multiple bid responses are satisfactory, which of those bid responses is preferred. Upon determining such a satisfactory and/or preferred bid response, the EPA 82 proceeds to a step 152. As discussed above, any given bid request can include multiple parameters and even time-varying parameters, which can include, for example, the time-profile of required power, power stiffness, limits on spikes, surges and sags, harmonic content, and reliability factors. In certain circumstances, these parameters can be classified as either hard parameters or soft parameters. If such is the case, then a bid response to a given bid can be evaluated first by determining whether the bid response has satisfied all of the hard parameters/requirements and, if so, then by further determining a value associated with how well the bid response satisfies the soft constraints (such as the amount of noise on the power line or maximum phase unbalance to be expected), through the use of a cost metric or the like. If none of the responses received in response to the further bids is satisfactory and/or preferred, then the EPA 82 at a step 150 is capable of revising the further bid(s) and then returning to step 134 to send out those revised further bid(s). If physical changes occur due to failure(s) or a natural catastrophe, the previously committed plans may need to be adjusted.

Even if the EPA 82 is able to guarantee, based upon its negotiations with one or more of the EPEAs or otherwise, that it could provide a requested amount of energy as set forth in the bid from the ECA 86, the EPA further typically must determine that in fact such energy could be delivered from the energy producer(s) 2 associated with the EPA to the energy consumer(s) 6 associated with the ECA 86 before the EPA can provide a bid response to the ECA. That is, the EPA 82 must determine whether there are appropriate energy transporters 8 available to deliver the requested energy from the energy producer(s) 2 to the energy consumer(s) 6. Although in some circumstances the EPA 82 would have this information readily available to it, for example, because energy transporter arrangements have been predetermined, in other circumstances the EPA 82 needs to obtain one or more commitment(s) from one or more of the ETAs 88 that one or more corresponding energy transporters 8 will be available for and capable of delivering the requested energy.

If it is determined, at the step 152, that commitment(s) from one or more of the ETAs are required, the EPA 82 then determines at a step 154 which ETAs are appropriate candidates for making the desired commitments. Then, at steps 156 and 158, respectively, the EPA 82 creates and sends additional bids to those of the ETAs (for example, the ETA 88 shown in FIG. 8) that have been identified as appropriate, thus initiating negotiation(s) with one or more of the ETAs. As discussed above with respect to the bids of the ECA 86 and the further bids of the EPA 82 with reference to the EPEA 84, the additional bids from the EPA 82 with respect to the ETAs can include price, quantity, and/or other information. Upon receiving one of these additional bids at a step 160, the receiving ETA 88 in response evaluates the bid at a step 162. Further, at a step 164, the ETA 88 in at least some embodiments determines whether any further commitments from outside agents would be required before the ETA could accept the bid. If further commitment(s) are required, then the ETA 88 pursues additional negotiations with such other agents as may be necessary, at a step 166.

If no further commitments from outside agents are required by the ETA 88 to respond to the additional bid received from the EPA 82 or, alternately, if such further commitments are required and have been achieved by way of the step 166 (or, if attempts to achieve further commitments have been attempted but failed), the ETA 88 then determines its appropriate response to the additional bid of the EPA 82 and provides that response to the EPA, at a step 168. As discussed above with reference to the negotiations among the ECA 86, the EPA 82, and the EPEA 84, the bid response of the ETA 88 can range from accepting the additional bid, to rejecting the bid, to proposing a counterbid in response to the additional bid or even taking other actions. The determinations by the ETA 88 regarding its appropriate response can be made based upon a variety of information, including the results of any negotiations conducted as part of the step 166, and also a variety of other information such as, for example, information regarding natural perturbations that are occurring (or could occur in the future) with respect to the energy transporters 8 corresponding to the ETA and/or, in some circumstances, additional negotiations among multiple ETAs. In certain circumstances, the agent can also respond to a bid request and hold the bid request in abeyance until such time as resources become available and the bid request can be efficiently satisfied. Such behavior is particularly applicable for addressing low-priority tasks such as maintenance or testing and self-testing activities that can be performed as time and resources permit.

As discussed above with respect to the negotiations between the ECA 86 and the EPA 82, even though the EPEA 84 and ETA 88 can provide bid responses that are acceptances of the bids received from the EPA 82, the mere submission of these bid responses does not finalize any commitments between the EPA and the EPEA 84/ETA 88 but merely constitutes planning. Commitments between the EPA and the EPEA/ETA only become finalized once the EPA has provided an acceptance to the original requesting ECA 86 and the ECA has in turn communicated an execution request back to the EPA at the step 116, at which time the EPA in turn communicates execution requests back to the appropriate EPEA/ETA. Similarly, any negotiations involving multiple EPEAs and ETAs that occur as part of the steps 140 and 164, respectively, do not result in final commitments. Rather, final commitments are only established upon the execution of the step 116, which precipitates execution requests up the chain to the EPEAs and ETAs.

When the EPA 82 receives a bid response from one of the ETAs (e.g., the ETA 88 shown in FIG. 8) at a step 170, the EPA at a step 172 in turn determines whether the response to the bid that has been received is satisfactory or, if multiple bid responses are received, whether any of those responses are satisfactory and, if multiple bid responses are satisfactory, which of those bid responses is preferred. If none of the responses received at the step 172 is satisfactory and/or preferred, then the EPA 82 at a step 174 is capable of revising the additional bid(s) and then returning to step 158 to send out those revised additional bid(s). However, upon determining that a satisfactory and/or preferred bid response has been received at the step 172, the EPA 82 has received all of the information that is necessary for determining its response to the ECA 86 and thus determines that response at a step 122, which is then sent back to the ECA at the step 124 as discussed above, allowing the ECA to determine whether it can commit and execute a plan with the other agents of the EMS.

It should be noted further that, as the agents 50 of the EMS interact with one another as discussed above to form (and eventually commit to and execute) plans with one another, supply chain information is generated regarding the identities of those of the agents that have tentatively or actually formed commitments with one another, as well as the nature of the commitments that have been tentatively or actually formed. This information can be stored by the respective agents that are involved with the respective plans and also, in certain embodiments, stored by agents that are not involved with those plans or by other devices such as the EMD 83. The stored information can take a variety of forms. For example, one of the EPAs 82, upon negotiating a plan with one of the ECAs 86, could add information regarding the identity of that ECA and the amount of energy to be consumed as a result of the negotiated relationship with that ECA (e.g., a "consumption quantity") to one or more consumption tables stored by that EPA.

To summarize, therefore, the process by which the agents 50 of the EMS communicate and negotiate with one another to satisfy the energy requirements of the energy consumers 6 can be a complicated but highly adaptive one involving numerous agents and agent relationships, and numerous sources of information that influence the different agents' negotiating tactics and decisions. The bids and bid responses submitted by the various agents to one another can be based upon intrinsic behavioral programming and other information stored within the respective agents' DCA infrastructure firmware 44 and/or application-specific agent software 48, which can employ a variety of decision-making algorithms such as, for example, algorithms that employ money-type rules or pricing-type rules, and subcontract management algorithms (which can come into play, for example, in the negotiations between the EPA and the EPEAs/ETAs). Also, the bids and bid responses of the agents 50 can be based upon various information that is outside of yet accessible to the agents including, for example, regulation information available at the EMD 83, information regarding the capabilities of the energy producers 2, energy production enablers 4, energy consumers 6 and energy transporters 8 controlled and/or monitored by the agents, and/or information regarding the respective responsibilities and capabilities of the agents, the last of which can be made available by way of the LDFs 66 and GDFs 64 as discussed above.

Further, the overall plan or plans that are developed to allow for proper supplying of energy to the ECA(s) likewise are often complicated but also are highly adaptive and, due to the implementation of pricing/money rules, result in a highly-efficient distribution of energy. Such overall plans typically include multiple levels of negotiated relationships among not only the ECA(s) and EPA(s) of the EMS, but also among the EPA(s) and the EPEA(s) of the EMS, among the EPA(s) and ETA(s) of the EMS, and even among other combinations of agents. As plans are developed during negotiations among the agents 50, one or more instances of plan templates can be created at the various agents to record relationship information and other information/values emerging during the planning process. Information is encoded as a sequence of hierarchical actions with possible precedence constraints. Upon commitment and execution of a given plan at the step 116, an appropriate instanced plan template then directs operation of the EMS with respect to execution of that plan. Typically (although not necessarily), the agents 50 of the EMS are capable of evolving in terms of their operation in real-time, order to respond to changing/dynamic operational conditions or needs of the energy-related system 1 or otherwise. Such real-time operation can include synchronization of sampling and analysis, controlling and monitoring state transitioning (and state transition rates), observing real-time changes in the behavior of the energy-related system 1 and/or the EMS in response to adjustments caused by the EMS (and comparison of such observed data with predictions and simulations, for example to determine system stability), and compensation for time differences in sampled data. Also, in some (but not all) embodiments, the agents are capable of "temporal reasoning". In such embodiments, time periods can be set within which the agents 50 must determine, as best as they can, a preferred solution (albeit perhaps not the optimal solution that might be determined if unlimited time was available for the agents to interact with one another). That is, the agents 50 are not allowed to indefinitely interact to determine optimal solutions, but instead must come to conclusions within required response times.

It also should be noted that, although in the embodiment of FIGS. 8 and 9 it is the agent that initiates negotiations with one or more other agents that submits bid(s) to those other agents to elicit bid responses from those other agents, in alternate embodiments the negotiations could take on other formats. Indeed, the present invention is intended to encompass a variety of agent-based distributed control systems in which agents interact with one another by any of a variety of different protocols or schemes involving negotiation, bidding, posting or other interactive mechanisms. For example, in certain alternate embodiments, the ECA desiring to obtain energy could submit a bid request to one or more of the EPAs. The EPAs in response could submit bids to the ECA for consideration by the ECA. A final commitment between the ECA and one or more of the EPAs would not ensue until the ECA provided a bid acceptance to one or more of the EPAs or even, in some embodiments, until the EPAs receiving such a bid acceptance provided a further message of commitment to the ECA. Also, in some alternate embodiments, the ECA could negotiate directly with the ETAs to establish commitments regarding the transporting of energy, with the EPEAs to establish the guaranteed supply of resources to the EPAs and even with other ECAs to resolve conflicts of interest. Further, in certain embodiments, two ECAs could negotiate directly with one another to determine an appropriate distribution of a limited amount of energy that is available. The present invention is intended to encompass these and other processes by which a plurality of agents associated with one or more of energy consumers, producers, production enablers and transporters interact to assure that one or more energy requirements of one or more energy consumers are met or that some other requirement of an energy-related system is met. Further, the present invention is intended to encompass processes in which new agents are added to or "spawned" within the EMS and/or agents are eliminated from the EMS and/or groupings of agents are modified (and/or new components are added to the energy-related system or brought on line and/or components are eliminated from that system and/or groupings of components are modified), or where the modes of operation of agents or system components are changed by the EMS or otherwise. In some embodiments, such processes can be implemented, observed and analyzed in real-time. In particular, system reactions to such changes can be analyzed, since resulting transients (e.g., ringing, sagging, or other anomalies including high-frequency power-line artifacts) can provide a rich source of information for diagnosis. For example, such information can be utilized to determine whether a new configuration is stable and can continue to operate.

Further Operational Characteristics of the EMS

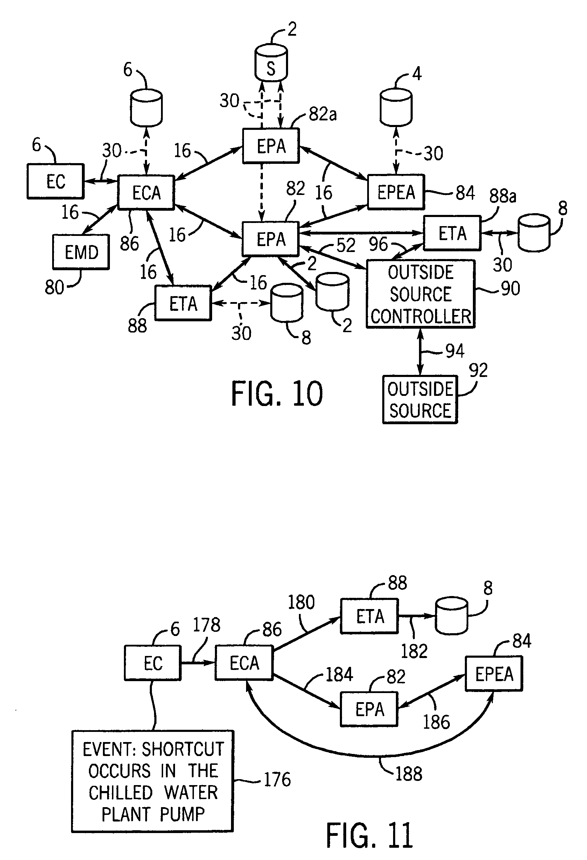

Turning to FIG. 10, the distributed control system 10 constituting the EMS is shown to be modified from that of FIG. 8 to allow for additional energy to be provided to the energy producers 2 of the energy-related system 1 from an outside source 92. Allowing additional energy to be provided from the outside source 92 enables the overall energy-related system 1 to more completely satisfy all of the competing demands of the various energy consumers 6 than would be possible if energy were only being supplied by the energy producers 2 of the energy-related system itself. For the EMS to communicate with the outside source 92 to allow for energy to be provided to the energy-related system 1 from the outside source, the EPA 82 is in communication with an outside source controller 90 by way of one of the alternate communication linkages 52, and messages therebetween are, in the present embodiment, JDL messages wrapped by a FIPA ACL wrapper. Use of the FIPA ACL wrapper (or a similar protocol) in particular can help to maintain the security of data transmitted between the EMS and the outside source controller 90.

Although in FIG. 10 the outside source controller 90 is shown as a control element that is distinct from the outside source 92 itself and in communication therewith by way of a communication link 94 (e.g., a dedicated communication link or network linkage), in alternate embodiments, the outside source controller 90 can be integrated with the outside source. However, regardless of the configuration of the outside source 92 and outside source controller 90, the outside source controller operates in a manner that is consistent with receiving messages from, sending messages to, and otherwise interacting with the EPA 82 with which the outside source controller is in communication. Thus, in certain embodiments the outside source controller 90 is or includes an agent and, in other embodiments, the outside source controller includes other software and/or hardware enabling proper communications and interaction with the EPA 82, for example, software providing an automated proxy capable of receiving and responding to bids. Also, in certain embodiments, multiple outside sources can exist and each can respond to a bid request or jointly participate in a bid request response.

In addition to communications between the outside source controller 90 and one or more of the EPAs of the EMS, additionally the outside source controller 90 is in communication with one or more ETAs (in FIG. 10, the ETA 88a) corresponding to one or more of the energy transporters 8. Such communications occur by way of one or more additional communication links 96, typically by way of additional JDL messages with FIPA ACL wrappers. The ETA 88a with which the outside source controller 90 is in communication, which in the embodiment shown is part of the EMS and connected to the EPA 82 by way of the network 16, communicates with the outside source controller 90 as necessary to guarantee sufficient allocation of the capabilities of energy transporters 8 so that energy intended to be transmitted from the outside source 92 to the EPA 82 can in fact be transmitted. In alternate embodiments, the energy transporters employed to transport energy from the outside source 92 to the EPA 82 need not be part of the energy-related system 1 but instead (like the outside source itself) can be elements that are external to that system, and similarly the ETA 88a can be replaced with an external agent or other controller or control element for controlling/monitoring such external energy transporters.

The interactions between the EMS, and in particular the EPA(s) of that system, and the outside source controller 90 can take the form of negotiations similar to those discussed above that are conducted among the ECAs, EPAs, EPEAs and ETAs within the EMS. For example, the EPA 82 can submit bids to the outside source controller 90 for additional energy from the outside source 92 and, in response, the outside source controller can determine an appropriate bid response based upon energy cost information, availability of energy at requested times, local priorities, regulations, and other information. The appropriate bid response can involve acceptance, rejection, a counterbid, or other information. Upon determining the proper bid response, the bid response can be sent back to the EPA 82. To the extent that the bid response provided by the outside source controller 90 does not involve an outright acceptance, the negotiation between the outside source controller and EPA 82 can continue on in a variety of manners that involve not only counterbids by the outside source controller but also, for example, an increased bid price by the EPA. Also, in certain circumstances the outside source controller 90 can adjust its own internal requirements, for example, by lowering its own energy cost, to gain the EPA as an exclusive customer for a low-demand time-period or season. Thus, a variety of factors can be considered by the agents 50 of the EMS as well as by the outside source controller 90 in their negotiations regarding the supply of energy. Depending upon the embodiment, the outside source controller can include its own agent structure and proceed to submit sub-bid requests internally. Bid response commitments can be similarly processed in accordance with local, non-outside agents. Further, multiple outside sources can each employ agent structures and interact together to generate a bid response. The outside sources could include, for example, municipal power, power distribution devices, alternate power sources such as windmill farms or alternate commercial power sources including competing energy company electrical suppliers, turbine generators, and other commercial energy sources.

With respect to the transporting of energy from the outside source 92 to the energy producer(s) 2 associated with the EPA 82, once negotiations concerning the supplying of energy from the outside source 92 have been concluded (e.g., a bid has been accepted but commitment and execution has not yet occurred), either the EPA or the outside source controller 90 can further negotiate with the ETA 88a corresponding to the energy transporter(s) 8 that are candidates for transporting the energy. Once these negotiations are completed, it is possible for the EPA 82 requiring the additional energy to operate based upon the premise that it will receive the required energy from the outside source, and thus possible for the EPA to further submit a bid response back to the bidding ECA 86 that has originally precipitated this need for additional energy.

Although in some embodiments the outside source 92 only intermittently supplies energy to the overall energy-related system 1, in other embodiments, the outside source and outside source controller 90 are controlled and/or configured to be continuously in contact with the energy-related system and to continuously provide at least a nominal amount of power (e.g., 15 to 30 MW) in the absence of any specific requests for larger amounts of energy/power. Such an arrangement involving the supply of a nominal power helps the energy-related system 1 to provide electrical frequency and voltage stability and to prevent picks or undesired power interruptions (which could negatively affect manufacturing processes or other energy consumers 6 depending upon the supply of energy). Thus, in such embodiments, the EMS operates in conjunction with the outside source controller 90 in a manner that under normal circumstances follows a standard negotiated contract for the nominal power but, when requirements for additional energy emerge, involves the negotiation and following of new arrangements concerning energy supply and delivery. Further, while FIG. 8 shows an embodiment in which the EMS is in communication with an external device for supplying additional energy, in alternate embodiments the EMS could also be in contact with (and negotiate with) other types of external devices such as, for example, external energy consumers. Also, if it is not possible for an energy consumer to obtain additional energy, the consumer will typically (although not necessarily) need to internally rearrange its operations to consume less energy. Additionally, in certain embodiments, the power grid itself could constitute an external energy consumer, particularly where it is advantageous to generate power locally and sell excess power to the utility company. Legislation makes this a viable option (based on buy versus sell energy costs) whenever excess energy or locally generated energy is available.

In addition to providing the above-discussed capabilities, the present invention also contemplates that the agents 50 of the distributed control system 10 forming the EMS can in at least some embodiments include diagnostic (as well as predictive/prognostic and/or simulation) capabilities and related anticipatory response capabilities. These capabilities enable the agents 50 to diagnose violations, abnormal conditions, and/or other conditions of interest regarding the energy producers, production enablers, consumers and transporters 2, 4, 6 and 8, respectively, as well as of the agents themselves, e.g., the EPAs, EPEAs, ECAs and ETAs 82, 84, 86 and 88, respectively. In certain embodiments, a Failure Modes, Effects and Criticality Analysis (FMECA) can be performed. Additionally, these capabilities enable the agents 50 to correct or otherwise address such violations, abnormal conditions or other conditions. Such corrective or other operations can include not only operations performed by the individual agents 50 themselves, for example, a local corrective action taken by one of the ECAs 86 with respect to its corresponding energy consumer 6 to eliminate/isolate a violation, but also communication and related interactions amount several of the agents.

To achieve these capabilities, one or more of the agents 50 include, or have access to (e.g., from the EMD 83), data acquisition, signal processing, diagnostic, prognostic, and/or simulation algorithms. These algorithms allow for the detection of machinery and process health conditions such as machinery faults and degraded operation, as well as the detection of changes in energy needs or capabilities of the energy consumers 6, energy producers 2, energy production enablers 4, or energy transporters 8 (or even the outside source 92 or other external system components). Also, in some circumstances, these algorithms allow for the prediction of certain failures, changes in energy needs, operational capabilities, or other characteristics. For example, some such algorithms could be used to detect problems such as power blackouts, distribution lines disruption, circuit overloading, phase imbalance, power sags, transformer degradation and similar anomalies. Also, certain of the algorithms allow for the trending of energy usage or market pricing analyses to be performed. By detecting problems, anomalies or other system conditions, or predicting/identifying changed energy needs or changed capabilities as they occur (or even prior to their occurrence) through the use of these algorithms, responses can be taken by the agents 50 of the distributed control system 10 forming the EMS to address such problems, anomalies or changing needs or capabilities.

Among the most common types of failures or anomalies that can be detected by the agents 50 associated with the EMS involve the consumption of power (e.g., by the energy consumers 6), the distribution of power (e.g., by the energy transporters 8), and the production of power (e.g., by the energy producers 2 and energy production enablers 4). In detecting and diagnosing failures or anomalies associated with these activities of the energy-related system 1, the agents 50 can employ a variety of failure criteria and analytical models that can vary depending upon the responsibilities of the agent. For example, one of the agents 50 could be assigned to controlling and monitoring a pump within an energy production enabler, and could sense a higher than normal level of vibration and establish several possible fault hypotheses such as bad bearings, loose mountings, or fluid cavitation. Further, the agents 50 can employ a variety of programs or algorithms enabling the agents to respond in appropriate fashions to diagnosed problems or conditions. For example, upon determining a pump-related fault such as that described above, and insofar as this type of fault could affect downstream energy consumption and process quality, the agent 50 would then consider multiple options as to how to react to the detected anomaly. For example, the agent could consider adjusting the speed of a motor associated with the pump, reducing the load, and/or utilizing a shedding sequence to avoid voltage picks in adjacent components to avoid a cascading effect.

The operations of the agents 50 to diagnose as well as address system faults, anomalies, changed needs or other conditions can also involve communication and/or collaboration among multiple agents. This is useful, and even necessary, in various circumstances where violations, perturbations or other abnormal behavior, and/or other conditions of one or more of the energy producers, production enablers, consumers and transporters 2, 4, 6 and 8, respectively, and/or one or more of the EPAs 82, EPEAs 84, ECAs 86 and ETAs 88, have the propensity to affect or are affecting other(s) of the energy producers, production enablers, consumers, transporters and/or associated agents. That is, by virtue of such communication and/or collaboration, corrections or other adjustments to the behavior of components of the energy-related system 1 as well as the EMS can be employed in a "system-wide" or otherwise expanded manner involving multiple agents 50 as well as several of the corresponding components of the energy-related system. Further, this type of collaborative behavior allows potential failure scenarios to be evaluated systemwide. All of this can be performed either during runtime operation and/or when parts or all of the system are disabled or shut down.

FIG. 11 is a modified form of FIG. 8 showing exemplary signal flow among several of the agents 50 of the EMS as those agents interact in response to a violation event 176 by one of the components of the energy-related system 1, namely, one of the energy consumers 6. As shown, upon occurrence of the violation event 176 at the energy consumer 6, which in this example is a short circuit in a chilled water plant pump, the ECA 86 corresponding to that energy consumer receives a first signal 178 from the energy consumer allowing the ECA to detect the violation event and recognize that immediate action is required to address the violation event. The ECA 86 in turn propagates a second signal 180 concerning the violation event to the ETA 88 corresponding to the energy transporter 8 that has been communicating power to the energy consumer 6. The ETA 88 recognizes based upon the second signal 180 that the energy transporter 8 should cut the power being delivered, and provides a third signal 182 to the energy transporter causing it to do so. The ETA 88 also evaluates the violation event in terms of how it may be appropriate to reconfigure or reroute the distribution of power using alternative circuits.

In addition to sending the second signal 180 to the ETA 88, the ECA 86 additionally (concurrently) sends a fourth signal 184 to the EPA 82 corresponding to the energy producer 2 that has been the source of the power for the energy consumer 6 at which the violation event occurred. The EPA 82 evaluates the violation event information and proceeds to remove, from its energy consumption tables, the energy consumption quantity that was scheduled for the energy consumer 6 at which the violation event occurred. This energy consumption quantity is then added back into an available energy table of the EPA 82. As a result, the cost of energy for the EPA in its negotiations for energy with other ECAs in the future is likely to be reduced. Further as shown, either the ECA 86 or the EPA 82 (or both) can contact, via fifth and/or sixth signals 186 and 188, respectively, the EPEA 84 corresponding to the energy production enabler 4 supplying resources to the energy producer 2. The fifth signal 186 in particular could be sent to inform the EPEA 84 to readjust its schedule concerning supplying materials used for power production. In the case of the sixth signal 188, the ECA 86 might wish to directly contact the EPEA 84 both insofar as the energy production enabler corresponding to the EPEA is providing resources to the energy producer 2 corresponding to the EPA 82 and also if the EPEA is supplying something of use to the particular energy consumer 6 corresponding to the ECA 86, for example, to inform the EPEA that it no longer needs to transmit chilled water to the chilled water plant pump that has experienced the violation event 176. Further for example, it could be advisable to operate the motor driving the hot water supply pump very slowly. This would avoid overheating the motor and prevent a winding failure. This strategy would maintain minimum functionality until a replacement motor could be obtained. Through the use of prognostics, it could be determined that, despite the slow motor operation, the motor would survive until a replacement motor was obtained and installed. The agents responding to the bid request further could establish the speed and duty cycle required by submitting an inquiry to an outside (e.g., the internet) motor replacement computer system and to a shipping logistics and maintenance scheduling system (e.g., a CMMS). For example, an agent responding to the bid request could determine that the motor operating a vent fan is capable of operating at 200 percent rated speed and load for 30 minutes. Real-time system information and prognostics models are employed to insure the reliable operation of the motor-fan system at extreme loads for the required time period.

FIG. 11 is intended to be exemplary of the propagation of information among components of the energy-related system 1 and EMS in response to a particular exemplary violation event 176. However, the present invention is intended to encompass a variety of different flow patterns of information among these components and possibly other components (e.g., the outside source 92 of FIG. 10) in response to a variety of different system conditions and occurrences. For example, in certain embodiments in which the energy consumer 6 is receiving energy from multiple energy producers 2 by way of multiple energy transporters 4, the ECA 86 would send signals to multiple EPAs and ETAs. Also, although not shown in FIG. 11, in certain circumstances the propagation of information would also include signals from the EPA to its corresponding energy producer, or signals from the EPEA to its corresponding energy production enablers.

In still other embodiments, new negotiations and bidding among a variety of the agents are begun upon the detection of a failure or other occurrence. For example, if one of the ECAs such as that described above detects a violation event such that its corresponding energy consumer 6 no longer requires power, then it may communicate this information (either directly or indirectly) to others of the ECAs corresponding to other energy consumers. These other ECAs in turn can recognize that additional energy resources potentially available from the EPAs have been freed up and consequently submit new bids to certain of the EPAs to fulfill as-of-yet unmet energy needs. Subsequently, further negotiations and bidding can occur among the EPAs, ETAs, EPEAs and other devices to further respond to these bids from the other ECAs. Alternately, rather than reallocating the power previously consumed by the energy consumer, the sudden lack of energy usage could indicate a severe component failure, flood, fire, or other emergency event. This information further might signal the deployment of maintenance or emergency support staff. The agents could then be operated to "probe" the system to establish the extent of damage or loss, to localize the failure, to establish whether the emergency condition is spreading and/or to begin planning to replace the services previously supplied by the energy consumer (or even perhaps plan for a more critical support service that is required in view of the loss of the less critical energy consumer).

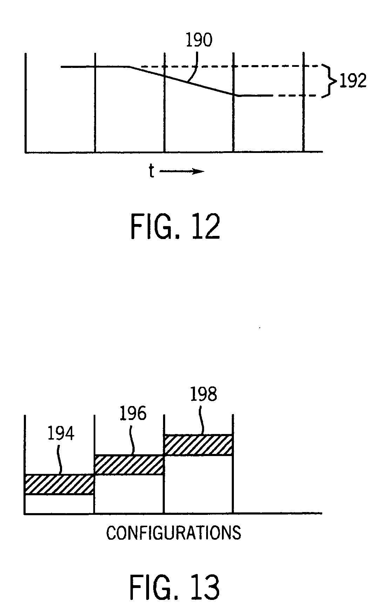

The present invention is intended to encompass a variety of different configurations of and methods employed by agents of the EMS that allow for the detection of failures and other conditions of the energy-related system 1 as well as the EMS itself. With reference to FIGS. 12 and 13, two exemplary methods for detecting system conditions are shown. In particular as shown graphically in FIG. 12, in accordance with a first of these methods, a quantity 190 (e.g., average power) is tracked over time and if a predetermined decrease (e.g., a decrease 192) occurs within a predetermined time, it is assumed that there is a malfunction. For example, if it is known that a particular one of the energy consumers 6 is an electrical motor that should be consuming a given amount of power but, over time, this power consumption has experienced the predetermined decrease, then the ECA 86 corresponding to that electrical motor will observe this to be the case, assume that an anomaly is present in the operation of the motor, and take appropriate action. Also for example, if there is a phase imbalance on a large machine indicating a winding in a motor or generator is degrading or running hot (and could potentially fail), then appropriate action could be taken to avoid winding failure. As windings heat up, the resistance increases thereby drawing more current for the same amount of speed and torque. Consequently, monitoring information regarding the relationship between current and speed/torque can be an effective diagnostic tool for determining the winding condition and serve as input to motor models and prognostic models to establish how critical the current operation condition is and the likelihood of a near-term winding failure.

Referring to FIG. 13, the present invention also contemplates a detection method that identifies appropriate normal ranges for particular quantities and then determines whether the monitored quantities have fallen outside such normal or desired ranges. In particular, in a preferred embodiment, learning algorithms can be implemented in one or more of the ECAs 86, EPAs 82, ETAs 88 and EPEAs 84 by which these agents monitor levels of quantities of interest (e.g., peak power levels) and, over time, develop signature ranges such as the ranges 194, 196, 198. These signatures can be collected in a table or functional surface that is updated periodically with new data, and in some circumstances the table/functional surface need not be updated with particular data (e.g., if it is determined that the data was obtained during a period of time in which a failure occurred). Alternately, the ranges can be determined by testing performed during training sessions, or simply be specified by a user. In still additional embodiments, although individual values are within acceptable ranges, the combination of several values taken together indicate a faulty condition or the potential for near term machinery failure or process upset. For example, based on flow, pressure, and pump speed, it might be determined that the motor current is too high. Interpretation of the combination of parameters could be performed using multi-dimensional tables, expert systems, artificial neural networks, or other model-based or model free algorithms as are well known.

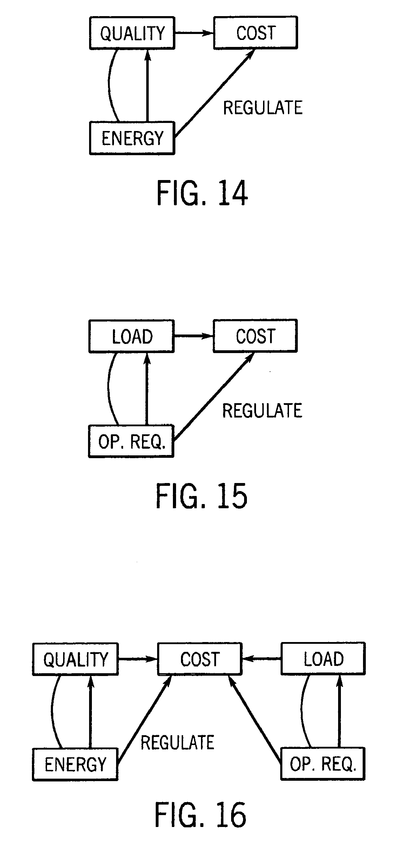

Turning to FIGS. 14-16, the agents 50 of the distributed control system 10 forming the EMS are programmed with cost models that allow the agents to effectively negotiate for energy in accordance with their own self-interests (e.g., in the interests of the machines 12 of the energy-related system 1 with which those agents are associated). The cost models typically are built according to business models of end-users, and have a direct relationship with production quantity and quality. Different cost (or price) models can be used by different agents 50. With respect to the EPAs 82, it is desirable generally to be able to provide energy at the lowest possible cost. To minimize cost, the energy production/ consumption needs to minimized. However, process quality can be affected by bad quality energy, and consequently energy production/consumption minimization will need to be penalized by process quality (which should generally not be allowed to suffer and consequently is a high priority constraint).

Accounting for these considerations, then, the EPAs 82 can calculate cost based upon a relationship of the following general form (as represented by FIG. 14), where E represents energy production/consumption and Q represents quality:

$$C_1 = f(E,Q) \tag{1}$$

As for the ECAs 86, a second relevant aspect helping to create bidding cost criteria relates to process load and operation requirements, as shown in FIG. 15. For example, in the case of an industrial process that is the energy consumer 6, the ECAs 86 will need to know how to plan for a balanced load distribution prior to and during the manufacturing process to minimize cost in the load versus operational cost criteria. Accounting for these considerations, then, the ECAs 86 can calculate cost based upon a relationship of the following general form (as represented by FIG. 16), where L(t) represents dynamic load and OR represents operational requirements:

$$C_2 = f(L(t),OR) \tag{2}$$

Preferably, albeit not necessarily, the agents 50 of the distributed control system 10 forming the EMS are capable of interacting and cooperating both prior to a time at which energy is needed and during the time at which energy is being provided. The considerations of interest discussed above can vary in their importance at these different times of interaction. For example, in the case where the energy-related system 1 is supplying energy to a manufacturing/ industrial process, during the planning period the agents 50 cooperate to establish a near-optimal production schedule to maximize the use of energy at the lowest possible cost while maintaining high quality. In contrast, during the production period the agents 50 consider all of the different criteria to create near-optimal plans, as shown in FIG. 16.

In general, the agents 50 of the EMS can be programmed with cost evaluation and load profiling criteria that allow the agents to balance different needs as appropriate. In particular, this information allows the bidding mechanisms for obtaining energy from the energy producers to help the agents assess accurate energy costs and act accordingly, e.g., to use process priorities to compete appropriately for energy. The models could be fairly complex, allowing for complex bid requests to be generated, for example, the models could allow for the generation of a bid request that included a block of power requested over time along with a planned or desired usage profile along with other power requirements (operating requirements) and variability in utilization (such as power level and duration of power usage), $f(L(t), OR, VAR)$. In high demand periods, processes with higher priority will prevail, but to carry out an overall process (e.g., an overall manufacturing process having both high and low priority portions) a dynamic adaptation of priorities and costs can be implemented. The real time assessment of load conditions also will help agents to identify anomalous behaviors in loads. The agents can use historical data and trending models to estimate the very near future conditions of the loads. Such assessments and estimations further allow the agents to properly prioritize different energy demands. In particular, allocating and scheduling the utilization of blocks of energy can help in defining an optimum schedule and provide reserve capacity for contingencies, emergencies, or unanticipated power needs. This permits some aspects of operation to transition from a reactive-only mode to an operating mode where the more stable, expected power requirements are planned and scheduled in an optimum manner to lower overall power costs and provide a basis for responding to new, possibly critical requirements in a more efficient manner. Historical information can also be employed to characterize the planned and unplanned power usage profile and provide a basis for determining the strategy for allocating future power blocks.

Further, cost optimization capabilities can be added, both in average terms and dynamically (such as limiting peak demand). In certain circumstances, the agents 50 of the EMS can operate to optimally configure (and reconfigure/ adjust) the energy-related system 1 to minimize energy use (even at the expense of other priorities such as, for example, noise level) or minimize cost (in certain embodiments, this can involve economic analyses). Another criteria to determine the preferred configuration is the expected stability or brittleness of the system. If spikes are expected on a particular line or a segment will be running acceptably but at or near capacity, this may not be the best configuration depending upon on the probability of sudden changes in demand or the possibility of a component failure causing a shutdown. Faults such as cascading failures may thus be avoided and consequential or collateral damage minimized.

In certain embodiments, the aforementioned algorithms and models for diagnosing and reacting to problems, anomalies and changed system needs, as well as for assessing costs and priorities and determining how to achieve various goals (including certain of the aforementioned software subcomponents such as the diagnostics portion 78), can be organized into a multi-level structure that conforms to the Computer and Business Equipment Manufacturer Association (CBEMA) specification or the Open Systems Architecture for Condition-Based Maintenance (OSACBM) specification or the Manufacturers Information Management Open Systems Alliance (MIMOSA). The CBEMA, MIMOSA and OSACBM specifications can be stored in the EMD 83 or elsewhere, and provide mechanisms by which some or all of the agents of the EMS are able to access information about specific machine components (e.g., bearings) or to request specific information such as expected machinery health and operating lifetime, regardless of the agent(s) with which those machine components are associated. In particular, the specifications establish layers of information that all of the agents 50 can consult during assessments of the operation of the equipment and energy supply activities of the energy producers, production enablers, consumers and transporters 2,4,6 and 8, respectively. Such information may be consulted in real time from manufacturer, technical expert, vendor, and technical staff via the Intranet and/or Internet.

The use of these specifications is helpful because it allows for collaborative interaction among different agents for the purposes of diagnosis and taking corrective action. That is, one agent can potentially interrogate portions of other agents to validate fault hypotheses or to establish the viability of operating under extreme, possibly never anticipated, conditions. For example, an agent sensing an abnormal level of vibration in a pump could communicate with another agent associated with a motor or valve of the pump to obtain corroborating information regarding which of multiple possible hypotheses (e.g., a bad bearing, loose mounting, or fluid cavitation) concerning the origin of the pump vibration was likely to be correct. Also for example, to implement a shedding sequence, the agent 50 might communicate with other agents or renegotiate previously negotiated arrangements with other agents. Further for example, it typically is advantageous for a subsequent analysis to be performed immediately following execution of a commitment among agents. The analysis will determine if the state transition and the new operating state achieved is as planned. For example, a difference in actual operating condition from anticipated operating condition could indicate that a switch is not working even though there are no direct diagnostics pointing to this failure. This information can trigger a re-configuration, valve inspection and maintenance, and coding the switch as unusable before this switch is activated as part of a critical emergency response plan.

The CBEMA, MIMOSA and OSACBM specifications permit specific routines such as de-noising algorithms, power spike detection routines, and mechanical fault or failure detection/prediction algorithms (e.g., regarding gears, bearings, valves, or motors) to be easily reused in a variety of different agents. In the case of the CBEMA specification, that specification in particular is applicable insofar as it establishes criteria for acceptable voltage excursions as a function of duration. Thus, depending upon the extent of excursions that occur in the supply or delivery of energy in the energy-related system 1 (or also with respect to any outside source as discussed above), the agents 50 of the distributed control system 10 forming the EMS (possibly in conjunction with an outside source controller such as the controller 90) are able to act and react to estimate abnormal cycles in voltage frequency and address such abnormalities.

It is specifically intended that the present invention not be limited to the embodiments and illustrations contained herein, but include modified forms of those embodiments including portions of the embodiments and combinations of elements of different embodiments as come within the scope of the following claims. For example, the present invention is intended to encompass control systems employed in relation to any energy-related system that employs one or more components that consume, transport, produce, and/or support the production of energy, whether such systems involve electrical or other types of energy, including systems in a variety of environments ranging from local power systems such as backup power systems available at facilities such as hospitals and power systems on board naval vessels or even automobiles, as well as more global power systems such as the overall national power grid. Also, the present invention involving an EMS that is an agent-based distributed control system is intended to be applicable for controlling/monitoring entire energy-related systems, portions thereof, and combinations of such systems, and in at least some embodiments can be implemented in combination with conventional control systems. Further, the present invention is intended to encompass agent-based distributed control systems that employ any of a variety of different bidding, negotiation, or other interaction protocols and schemes in addition to, or instead of, the protocols/schemes discussed above with reference to, for example, FIG. 9. Also, for example, the present invention in certain embodiments is intended to include agent capabilities allowing the agents to self-diagnose problems associated with the agents of the EMS itself including diagnosis of internal faults and misinformation, whether such faults and misinformation be accidental or even purposeful, so as to allow the EMS to protect itself. In particular, agents of the EMS could be programmed to enable the EMS to detect agent behavior that suggests that one or more agents have for some reason become "rogue agents" (e.g., due to purposeful reprogramming by a terrorist) that are operating in an improper manner (e.g., the rogue agents are providing misleading bid responses). In some embodiments, actions can also or instead be taken before a failure or a process upset occurs. For example, a bid request could be issued to cause the system to operate in a more economically efficient manner (e.g., having shorter water or power runs, closing unused sections to avoid heat losses, etc.), to avoid stressing already weakened components or to transition to a more robust, failuresafe state. Alternately, a bid request and change in control can be prescribed to actively probe the system to confirm viable equipment operation or efficiencies. Indeed in certain embodiments, it is even possible to take prognostic/predictive actions while a building is designed and before it is operational. In particular, it is possible to simulate various situations and their impact upon energy systems, as well as possible to determine how the agent-based control systems controlling those systems will react in such situations. Thus, it is also possible to determine whether particular configurations or designs of energy systems as controlled by agent-based systems will respond in a relatively effective manner in comparison with other possible configurations or designs. Further, to the extent that the operation of energy systems and the agent-based control systems controlling those energy systems can be simulated during design, it is also possible for the designer to determine, before the energy system is ever built, what optimal responses to different system conditions might be. Not only can the agent-based control systems of the energy system be programmed or modified accordingly if necessary, but also the designer can program the agent-based control systems with information or suggested courses of action that in turn can be utilized by the agent-based control systems or human beings should such conditions actually occur sometime in the future.

In summary the invention discloses a control system for an energy-related system including at least a first energy consumer and a first energy producer, and related method. The control system includes a first agent in communication with the first energy consumer for the purpose of at least one of controlling and monitoring an operation of the first energy consumer, a second agent in communication with the first energy producer for the purpose of at least one of controlling and monitoring an operation of the first energy producer, and a network at least indirectly coupling the first and second agents and allowing for communication therebetween. The first and second agents are capable of negotiating with one another in order to determine an amount of energy to be delivered from the first energy producer to the first energy consumer.

**Claims**

1. A control system for an energy-related system including at least a first energy consumer and a first energy producer, the control system comprising:

a first agent in communication with the first energy consumer for the purpose of at least one of controlling and monitoring an operation of the first energy consumer;

a second agent in communication with the first energy producer for the purpose of at least one of controlling and monitoring an operation of the first energy producer; and

a network at least indirectly coupling the first and second agents and allowing for communication therebetween, wherein the first and second agents are capable of negotiating with one another to determine an amount of energy to be delivered from the first energy producer to the first energy consumer.

2. The control system of claim 1, wherein the first and second agents are further capable of negotiating with one another to determine a price corresponding to the amount of energy to be delivered from the first energy producer to the first energy consumer

3. The control system of claim 1 or 2, wherein the first and second agents are further capable of negotiating with one another to determine at least one of a time at which the amount of energy is to be delivered from the first energy producer to the first energy consumer, and a duration of time over which the amount of energy is to be delivered from the first energy producer to the first energy consumer.

4. The control system of claim 1, 2 or 3, wherein the first and second agents are further capable of negotiating with one another to determine at least one of a power rate, a peak power level, a voltage level, a current level, a frequency level, a phase setting, a power factor value, a power type of the energy to be delivered, an amount of energy to be stored, and a manner of routing energy..

5. The control system of one of claims 1 to 4, further comprising:

a third agent in communication with a first energy production enabler of the energy-related system for the purpose of at least one of controlling and monitoring an operation of the first energy production enabler, wherein the third agent is also in communication with the second agent by way of the network, and wherein the second and third agents are further capable of negotiating with one another to determine a quantity of a substance to be delivered from the first energy production enabler to the first energy producer.

6. The control system of claim 5, wherein the substance is cooled water, and wherein the second and third agents further determine a price associated with the quantity of the substance.

7. The control system of claim 5 or 6, further comprising:

a fourth agent in communication with a second energy production enabler of the energy-related system for the purpose of at least one of controlling and monitoring an operation of the second energy production enabler, wherein the fourth agent is also in communication with the third agent by way of the network, and wherein the third and fourth agents are further capable of negotiating with one another to determine an additional quantity of an additional substance to be delivered from the second energy production enabler to the first energy production enabler.

8. The control system of one of claims 1 to 7, further comprising:

a third agent in communication with a first energy transporter of the energy-related system for the purpose of at least one of controlling and monitoring an operation of the first energy transporter, wherein the third agent is also in communication with the second agent by way of the network, and wherein the second and third agents are further capable of negotiating with one another to determine a quantity of energy to be delivered from the first energy producer to the first energy consumer via the first energy transporter.

9. The control system of claim 8, further comprising:

a fourth agent in communication with a first energy production enabler of the energy-related system for the purpose of at least one of controlling and monitoring an operation of the first energy production enabler, wherein the fourth agent is also in communication with the second agent by way of the network, wherein the second and fourth agents are further capable of negotiating with one another to determine a quantity of a substance to be delivered from the first energy production enabler to the first energy producer, and

wherein the first agent is an energy consumer agent, the second agent is an energy producer agent, the third agent is an energy transporter agent, the fourth agent is an energy production enabler agent, the first energy consumer is a motor, the first energy producer is a natural-gas powered generator, the first energy transporter is a power line including at least one switch, and the first energy production enabler is a natural gas supplying component.

10. The control system of one of claims 1 to 9,

   wherein the second agent is further in communication with an external control component, and wherein the communication between the second agent and the external control component determines an amount of a substance provided from an external source to the first energy producer.

11. The control system of claim 10,

   wherein communications between the first and second agents over the network and between the second agent and the external control component occurs by way of messages in the form of scripts written in at least one of JDL, XML and KQML and further wrapped in a FIPA ACL wrapper, and
   wherein the network is at least one of an Ethernet, ControlNet or DeviceNet-type network.

12. The control system of one of claims 1 to 11, further comprising:

   a database coupled to the network and storing information of potential relevance to operations of the energy-related system including regulations pertinent to at least one of generation, distribution and consumption of energy.

13. The control system of one of claims 1 to 12, wherein the energy is electrical energy.

14. The control system of one of claims 1 to 13, wherein the negotiating between the first and second agents includes:

   providing a first bid from the first agent to the second agent concerning a desired amount of energy;
   processing the first bid at the second agent to determine a first response to the first bid;
   sending the first response to the first agent; and
   processing the first response at the first agent.

15. The control system of claim 14,

   wherein if the first response is positive the first agent in turn determines whether to commit to a plan that is based at least in part upon a characteristic of at least one of the first bid and the first response; and
   wherein if the first response is negative the first agent in turn determines whether to submit a new bid or to cease negotiating.

16. The control system of claim 14 or 15, wherein the processing of the first bid at the second agent can include at least one of:

   evaluating the first bid;
   determining whether an additional commitment from an other entity is required to respond positively to the first bid;
   if the additional commitment is necessary, then:

      providing a second bid from the second agent to a control element associated with the other entity;
      processing the second bid at the control element to determine a second response to the second bid;
      sending the second response to the second agent; and
      processing the second response at the second agent.

17. The control system of claim 16, wherein the control element is at least one of a third agent associated with an energy transporter, a fourth agent associated with an energy production enabler, and an external control element associated with an external source.

18. The control system of claim 16 or 17, wherein the processing of the first bid by the second agent includes an assessment by the second agent of whether the second agent can satisfy the amount of energy in view of other existing commitments that the second agent has made with respect to at least one of the first agent, an other agent, and a control element.

19. The control system of one of claims 1 to 18, wherein upon creating a creating a tentative negotiated plan involving the amount of energy, the first and second agents then commit to the plan and subsequently execute the plan.

20. The control system of one of claims 1 to 19, wherein upon detection of an anomaly regarding the first energy consumer, the first agent sends a first signal to a third agent associated with an energy transporter that is providing energy to the first energy consumer, the third agent tending to respond to the first signal by causing the energy transporter to modify the providing of energy to the first energy consumer, and also the first agent sends a second signal to at least one of the second agent and a fifth agent associated with an energy production enabler that is providing a substance to the first energy producer.

21. The control system of one of claims 1 to 20, wherein at least one of the first and second agents includes programming allowing for the respective agent to detect an occurrence of at least one of an anomaly and a particular operational condition;
wherein the programming includes at least one of a first program determining whether an operational parameter has changed in a value beyond a predetermined threshold within a predetermined period of time and a second program determining whether the operational parameter no longer is within a signature range.

22. The control system of claim 21, wherein the signature range is determined on a continuous learning basis.

23. The control system of one of claims 1 to 22, wherein each of the first and second agents includes base firmware programming, DCA infrastructure programming, application-specific agent programming, and application-specific control programming.

24. The control system of claim 23, wherein each of the first and second agents includes at least one directory facilitator, and wherein the directory facilitators of the agents includes at least one local directory facilitator and one global directory facilitator.

25. The control system of claim 23 or 24, wherein each of the first and second agents further includes operating system programming, wherein the DCA infrastructure programming of each of the agents includes planner programming and execution controller programming, and wherein the application-specific agent programming of each of the agents includes at least one of a diagnostics model, an equipment model, and a plurality of scripts.

26. The control system of claim 23, 24 or 25, wherein each of the agents includes a respective data table allowing for intercommunications between the respective application-specific agent programming and application-specific control programming of the respective agents.

27. The control system of one of claims 1 to 26, wherein at least one of the first and second agents employs a cost model in determining at least one of a price associated with the first bid and a price capable of being paid as indicated in the first response, wherein the cost model reflects at least one of a consumption amount, a production amount, a quality factor, a process load and an operational requirement.

28. A control system for an energy-related system including a plurality of system components including at least two of a first energy consumer, a second energy consumer, a first energy producer, a second energy producer, a first energy transporter, a second energy transporter, a first energy production enabler, a second energy production enabler, and an external energy source, the control system comprising:

a first agent in communication with at least a first of the system components for the purpose of at least one of controlling and monitoring a first operation of the first system component;
a second agent in communication with at least a second of the system components for the purpose of at least one of controlling and monitoring a second operation of the second system component; and
a network at least indirectly coupling the first and second agents and allowing for communication therebetween, wherein the first and second agents are capable of communicating with one another to arrive at an agreed-upon interoperation of the first and second system components, the agreed-upon interoperation relating to at least one of consuming, distributing, generating and supporting generation of energy.

**EP 1 635 286 A1**

29. The control system of claim 28, wherein each of the first and second agents is an autonomous cooperative unit, wherein the first agent operates to develop a bid concerning a need pertaining to at least one of the consuming, distributing, generating and supporting generation of energy and to send the bid to the second agent, and wherein the second agent operates to process the bid and determine a bid response.

30. The control system of claim 28 or 29, further comprising a means for storing information that stores at least one of regulation information and a cost model, and wherein at least one of the bid and the bid response is determined based upon the cost model.

31. A method of controlling operation of an energy-related system including at least a first energy consumer and a first energy producer, the method comprising:

> determining, at a first agent-based control device associated with the first energy consumer, that a need for energy exists at the first energy consumer;
> generating at the first agent-based control device a first bid concerning the need;
> sending the first bid from the first agent-based control device to a second agent-based control device associated with the first energy producer;
> processing the first bid at the second agent-based control device to determine a first bid response;
> sending the first bid response from the second agent-based control device to the first agent-based control device; and
> if the first bid response is favorable, determining at the first agent-based control device whether to execute a plan based at least in part upon at least one of bid information in the first bid and bid response information in the first bid response, wherein execution of the plan results in at least a portion of the need being met.

32. The method of claim 31, wherein the processing of the first bid at the second agent-based control device includes:

> evaluating the first bid;
> determining whether an additional commitment from an other entity is required to respond positively to the first bid;
> if the additional commitment is necessary, then:
>
> > providing a second bid from the second agent to a control element associated with the other entity;
> > processing the second bid at the control element to determine a second bid response to the second bid;
> > sending the second bid response to the second agent; and
> > processing the second bid response at the second agent.

33. The method of claim 31 or 32, wherein the control element is at least one of an additional agent-based control device and an external control device, and wherein the first agent-based control device also determines whether to commit to the plan prior to executing the plan.

34. The method of claim 33, wherein the other entity is at least one of an energy production enabler, an energy transporter, and an external energy source, and wherein the second bid concerns a request for at least one of an energy production-enabling substance, capacity for distribution of energy and additional energy.

35. The method of one of claims 31 to 34 wherein, if the bid response is not favorable, determining whether to generate and send a modified bid to the second agent-based control device.

36. The method of one of claims 31 to 35, wherein the processing at the second agent-based control device includes at least one determination of whether a requested amount of energy set forth in the first bid can be supplied by the first energy producer given an existing commitment of the first energy producer and, if not, determining whether at least one of the existing commitment can be modified and the requested amount of energy can be provided by another source.

37. The method of one of claims 31 to 36, further comprising determining that the second agent-based control device is an appropriate entity to which the bid can be sent based upon information stored within a directory facilitator.

38. A control device for implementation in conjunction with at least one component of an energy-related system, the energy-related system including at least one of a first energy consumer, a first energy producer, a first energy transporter, a first energy production enabler, and an external energy source, the control device comprising:

a controller configured to operate as an agent, the controller including at least one memory device on which is stored generalized agent operational programming and application-specific agent programming,

wherein the generalized agent operational programming is capable of constructing outbound messages intended to be sent to, and interpreting inbound messages received from, at least one other agent,

whereby the controller operating as the agent is able to intercommunicate with the at least one other agent to negotiate a plan of operation concerning at least one of energy consumption, energy distribution, energy production, and support of energy production, and then execute the plan of operation.

39. The control device of claim 38, wherein the negotiating of the plan is followed by a decision as to whether to commit to the plan and, if a commitment is made to the plan, subsequently followed by an execution of the plan.

40. The control device of claim 38 or 39, wherein the at least one memory device further includes base firmware, application-specific control programming, operating system programming, and a data table allowing for communication between the application-specific control programming and the application-specific agent programming.

41. A system for performing an energy-related process including at least one of consuming, distributing, producing and supporting the production of energy, and controlling the process, the system comprising:

first components for performing the energy-related process including at least two of a first energy consumer, a second energy consumer, a first energy producer, a second energy producer, a first energy transporter, a second energy transporter, a first energy production enabler, a second energy production enabler, and an external energy source; and

second components for controlling the respective first components, wherein the second components include at least two agent-based controllers respectively in association with respective ones of the at least two first components, the at least two agent-based controllers being in communication with one another by way of a network, the at least two agent-based controllers being configured to negotiate with one another to arrive at plans to satisfy requirements of the first components.

42. The system of claim 41, wherein each of the at least two agent-based controllers includes base firmware, application-specific control programming, generalized agent-related programming, and application-specific agent programming.

43. The system of claim 41 or 42, wherein the agent-based controllers are programmed with at least one of cost evaluation and load profiling criteria.

44. The system of claim 41, 42 or 43, wherein the agent-based controllers are capable of assessing at least one of accurate energy costs and process priorities.

45. The system of claim 44, wherein the agent-based controllers are capable of assessing process priorities and dynamically adapting priorities.

46. The system of one of claims 41 to 45, wherein the agent-based controllers are capable of identifying anomalous behavior in loads based upon real-time assessments of load conditions.

47. The system of claim 46, wherein the agent-based controllers are capable of using at least one of historical data and trending models to estimate future conditions of loads.

48. A control system for an energy-related system, the control system comprising a plurality of agent-based control elements respectively coupled to respective components of the energy-related system, the plurality of agent-based control elements being in communication with each other by way of at least one network.

49. The control system of claim 48, wherein the agents operate in at least three of creation, commitment, execution and analysis/evaluation phases of operation.

50. The control system of claim 48 or 49, wherein a plan created by the agents during the creation phase includes a transition plan portion that includes a plurality of intermediate steps.

51. The control system of claim 48, 49 or 50, wherein the agents operate in the analysis/evaluation phase of operation based upon at least one of mission/objective information and information concerning real world system operation, and wherein the mission-objective information in at least some cases can dynamically vary with time.

52. The control system of one of claims 48 to 51, wherein the control system includes two agents each of which are coupled to respective energy consumers, and wherein the two agents negotiate to determine an appropriate distribution of energy among the two agents.

53. The control system of one of claims 48 to 52, wherein the agents are capable of interacting with one another to dynamically adjust to changing conditions or needs, and wherein the agents are organized in a hierarchy.

54. The control system of one of claims 48 to 53, wherein the agents are capable of at least one of interacting in a real-time manner and interacting in a manner exhibiting temporal reasoning.

55. The control system of one of claims 48 to 54, wherein the network is at least one of a wired network, a wireless network, an internet-based network, and an X10-based power-line network.

56. The control system of one of claims 48 to 55, wherein at least one of the agents includes at least one of diagnostic, prognostic and simulation capabilities.

57. The control system of claim 56, wherein the agents are capable of diagnosing conditions in real-time based upon dynamically observed information.

58. The control system of claim 56 or 57, wherein at least one of the agents is able to determine an optimal configuration using a gradient search technique.

59. The control system of claim 56, 57 or 58 wherein the agents are at least one of capable of observing and controlling state transitions, and controlling at least one of an addition of a further agent to the control system and an elimination of one of the agents from the control system.

60. The energy-related system controlled by one of claims 48 to 59 control system, wherein the energy-related system is for at least one of an international power system, a regional power grid, a subdivision, a plant system, a vehicle, a shipboard system, a component, a subsystem, and a micro-device.

FIG. 1

EP 1 635 286 A1

FIG. 4

FIG. 2

FIG. 3

FIG. 5

| AGENT | CAPABILITY |
|---|---|
| SOURCE 1 | PRODUCE |
| VALVE 2 | OPEN; CLOSE |
| SOURCE 1 | PRODUCE |
| LOAD 1 | ACCEPT |
| LOAD 2 | ACCEPT |
| SWITCH 1 | ON / OFF |

| AGENT | ADDRESS |
|---|---|
| SOURCE 1 | A1 |
| VALVE 2 | A2 |
| SOURCE 1 | B1 |
| LOAD 1 | C1 |
| LOAD 2 | D1 |
| SWITCH 1 | E1 |

FIG. 6

FIG. 7

FIG. 8

FIG. 9A

TO
FIG. 9A
(A)

TO
FIG. 9A
(B)

FROM
FIG. 9A
(C)

FROM
FIG. 9A
(D)

NO ← SATISFACTORY BID RESPONSE RECEIVED ? —148

↓ YES

122—
DETERMINE BID RESPONSE ← NO — REQUIRE ETA COMMITMENT ? —152

↓ YES

156—
CREATE ADDITIONAL BIDS ← DETERMINE ETA CANDIDATES —154

SEND ADDITIONAL BIDS --→ RECEIVE BID → EVALUATE BID —162

158— 160—

REQUIRE FURTHER COMMITMENT ? —164 — YES

↓ NO

170—
RECEIVE ADDITIONAL BID RESPONSES ←-- RESPOND TO EPA ADDITIONAL BID ← NEGOTIATE

168— 166—

174—
DETERMINE BID CHANGE

NO — SATISFACTORY BID RESPONSE RECEIVED ? —172

YES

FIG. 9B

FIG. 10

FIG. 11

190

192

t ⟶

## FIG. 12

198

196

194

CONFIGURATIONS

## FIG. 13

FIG. 14

FIG. 15

FIG. 16

## EUROPEAN SEARCH REPORT

**European Patent Office**

| Application Number |
|---|
| EP 05 01 4209 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 431 899 A (ROCKWELL AUTOMATION TECHNOLOGIES, INC) 23 June 2004 (2004-06-23) * abstract * * column 1, paragraph 1 - column 2, paragraph 10 * * column 3, paragraph 15 * * column 6, paragraph 39 - column 8, paragraph 45 * * column 11, paragraph 59 - column 12, paragraph 63 * * column 13, paragraphs 70,71 * ----- | 1-60 | G06Q10/00 |
| X | WILDBERGER A M ED - JAIN L C: "Autonomous adaptive agents for distributed control of the electric power grid in a competitive electric power industry" KNOWLEDGE-BASED INTELLIGENT ELECTRONIC SYSTEMS, 1997. KES '97. PROCEEDINGS., 1997 FIRST INTERNATIONAL CONFERENCE ON ADELAIDE, SA, AUSTRALIA 21-23 MAY 1997, NEW YORK, NY, USA,IEEE, US, vol. 1, 21 May 1997 (1997-05-21), pages 2-11, XP010242668 ISBN: 0-7803-3755-7 * abstract * * page 5, right-hand column, line 39 - page 8, left-hand column, line 20 * * page 10, left-hand column, line 1 - right-hand column, line 47 * ----- -/-- | 1-60 | **TECHNICAL FIELDS SEARCHED (Int.Cl.7)** G06F |

The present search report has been drawn up for all claims

| Place of search | Date of completion of the search | Examiner |
|---|---|---|
| The Hague | 7 September 2005 | De Smet, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    
& : member of the same patent family, corresponding document

EPO FORM 1503 03.82 (P04C01)

**European Patent Office**

**EUROPEAN SEARCH REPORT**

Application Number

EP 05 01 4209

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | TOLBERT L M ET AL: "Scalable multi-agent system for real-time electric power management" 2001 IEEE POWER ENGINEERING SOCIETY. SUMMER MEETING. CONFERENCE PROCEEDINGS. VANCOUVER, CANADA, JULY 15 - 19, 2001, IEEE POWER ENGINEERING SOCIETY, NEW YORK, NY : IEEE, US, vol. VOL. 2 OF 3, 15 July 2001 (2001-07-15), pages 1676-1679, XP010567999 ISBN: 0-7803-7173-9 * abstract * * page 1676, right-hand column, line 24 - page 1677, right-hand column, line 17 * ----- | 1-60 | |
| A | MATURANA F ET AL: "Using dynamically created decision-making organizations (holarchies) to plan, commit, and execute control tasks in a chilled water system" DATABASE AND EXPERT SYSTEMS APPLICATIONS, 2002. PROCEEDINGS. 13TH INTERNATIONAL WORKSHOP ON 2-6 SEPT. 2002, PISCATAWAY, NJ, USA,IEEE, 2 September 2002 (2002-09-02), pages 521-527, XP010612076 ISBN: 0-7695-1668-8 * abstract * * paragraph 1 "Introduction", pages 1-2 * * paragraph 2.1 "Agent types and capabilities", pages 2-3 * * paragraph 3.1 "Job Description Language", pages 4-5 * ----- -/-- | 1-60 | TECHNICAL FIELDS SEARCHED (Int.Cl.7) |

The present search report has been drawn up for all claims

| Place of search | Date of completion of the search | Examiner |
|---|---|---|
| The Hague | 7 September 2005 | De Smet, M |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P04C01)

**European Patent Office**

**EUROPEAN SEARCH REPORT**

Application Number

EP 05 01 4209

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2003/078678 A1 (MATURANA FRANCISCO PAUL ET AL) 24 April 2003 (2003-04-24)<br>* abstract *<br>* page 1, paragraph 3-8 *<br>* page 2, paragraph 34 - page 3, paragraph 41 *<br>----- | 1-60 | |
| | | | **TECHNICAL FIELDS SEARCHED** (Int.Cl.7) |

The present search report has been drawn up for all claims

| Place of search | Date of completion of the search | Examiner |
|---|---|---|
| The Hague | 7 September 2005 | De Smet, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 05 01 4209

This annex lists the patent family members relating to the patent documents cited in  the above-mentioned European search report.
The members are as contained in the European Patent Office EDP file on
The European Patent Office is in no way liable for these particulars which are merely  given for the purpose of information.

07-09-2005

| Patent document cited in search report | | Publication date | Patent family member(s) | | Publication date |
|---|---|---|---|---|---|
| EP 1431899 | A | 23-06-2004 | EP | 1431899 A2 | 23-06-2004 |
| | | | US | 2004204784 A1 | 14-10-2004 |
| | | | US | 2004204772 A1 | 14-10-2004 |
| | | | US | 2004268186 A1 | 30-12-2004 |
| | | | US | 2004205412 A1 | 14-10-2004 |
| | | | US | 2004250168 A1 | 09-12-2004 |
| | | | US | 2004217654 A1 | 04-11-2004 |
| | | | US | 2005034023 A1 | 10-02-2005 |
| | | | US | 2005108453 A1 | 19-05-2005 |
| US 2003078678 | A1 | 24-04-2003 | EP | 1302825 A2 | 16-04-2003 |

EPO FORM P0459

For more details about this annex : see Official Journal of the European Patent Office, No. 12/82